# EUROPEAN PATENT APPLICATION

(11) **EP 4 770 150 A1**
(43) Date of publication of application: **01.07.2026**
(21) Application number: 24942484.7
(22) Date of filing: 16.12.2024
(51) Int. Cl.: H04W 4/80, H04W 4/02

(54) **DEVICE SEARCHING METHOD AND ELECTRONIC DEVICE**

(30) Priority: 03.06.2024 CN 202410710825
(71) Applicant: HUAWEI TECHNOLOGIES CO., LTD., Shenzhen, Guangdong 518129 (CN)
(72) Inventor: LIU, Zheng, Shenzhen, Guangdong 518129 (CN); XIA, Ri, Shenzhen, Guangdong 518129 (CN); WANG, Liang, Shenzhen, Guangdong 518129 (CN); HU, Shibang, Shenzhen, Guangdong 518129 (CN); LIANG, Jiaqi, Shenzhen, Guangdong 518129 (CN)
(74) Representative: Epping - Hermann - Fischer
(86) International application number: PCT/CN2024/139643
(87) International publication number: WO 2025/251581

(57) **Abstract**

A device search method and an electronic device are provided, to implement precise searching for an electronic device, and increase a probability of finding a lost electronic device by a user. When a first electronic device is in a power-off state or a power saving mode and a short-range communication module of the first electronic device has established a connection to a short-range communication module of a second electronic device, the short-range communication module of the second electronic device sends a first instruction to the short-range communication module of the first electronic device. In response to the first instruction, a sparklink module of the first electronic device sends a first broadcast message to a sparklink module of the second electronic device. In response to the first broadcast message, the second electronic device outputs at least one of the following: a distance between the first electronic device and the second electronic device, and a direction of the first electronic device relative to the second electronic device.

## Description

This application claims priority to Chinese Patent Application No. 202410710825.6, filed with the China National Intellectual Property Administration on June 3, 2024 and entitled "DEVICE SEARCH METHOD AND ELECTRONIC DEVICE", which is incorporated herein by reference in its entirety.

### TECHNICAL FIELD

This application relates to the field of terminal technologies, and in particular, to a device search method and an electronic device.

### BACKGROUND

An electronic device (for example, a mobile phone or a tablet computer) held by a user may be lost, leading to privacy leakage and property loss of the user. To address this problem, a search-after-loss function, for example, an offline search function or an online search function, is configured on many current electronic devices. When the user searches for the lost electronic device by using a search device (for example, an electronic device other than the lost electronic device), if the lost electronic device is connected to a network, the online search function enables the lost electronic device to receive, based on the network, an instruction from the search device and report a location of the lost electronic device in real time; or if the lost electronic device is not connected to a network, the offline search function enables the lost electronic device to report a location through a surrounding electronic device. For example, the surrounding electronic device reports a location of the surrounding electronic device to the search device as a location of the lost electronic device. In the offline search solution, only an approximate range of the lost electronic device can be determined, leading to a low probability of finding the lost electronic device by the user.

### SUMMARY

This application provides a device search method and an electronic device, to implement precise searching for an electronic device, and increase a probability of finding a lost electronic device by a user.

To achieve the foregoing objective, the following technical solutions are used in this application. According to a first aspect, a device search method is provided. The method is applied to a first electronic device. The first electronic device includes a short-range communication module and a sparklink module. The short-range communication module and the sparklink module are in an operating state when the first electronic device is in a power-off state or a power saving mode. The method includes: When the first electronic device is in the power-off state or the power saving mode and the first electronic device is connected to a second electronic device through the short-range communication module, the short-range communication module receives a first instruction from the second electronic device. The short-range communication module enables, in response to the first instruction, the sparklink module to send a first broadcast message, where the first broadcast message is used to determine at least one of the following: a distance between the first electronic device and the second electronic device, and a direction of the first electronic device relative to the second electronic device.

According to the foregoing technical solution, when the first electronic device (namely, a lost device) is in the power-off state or the power saving mode, the lost device may still establish a connection to the second electronic device (namely, a search device) through the short-range communication module in the operating state, may receive the first instruction from the search device based on the established connection, and may enable, in response to the instruction, the sparklink module that is still in the operating state to send the broadcast message. Then at least one of the following may be determined based on the broadcast message: a distance between the search device and the lost device, and a direction of the lost device relative to the search device. In this way, when the search device is located near the lost device, the distance between the search device and the lost device, the direction of the lost device relative to the search device, and the like may be determined according to the foregoing solution, to implement precise searching for the lost device, and increase a probability of finding the lost device by a user.

In a possible design, the first electronic device further includes a speaker module, the speaker module is in an operating state when the first electronic device is in the power-off state or the power saving mode, and that the short-range communication module enables, in response to the first instruction, the sparklink module to send the first broadcast message includes: In response to the first instruction, the short-range communication module enables the sparklink module to send the first broadcast message, and enables the speaker module to send ultrasonic data, where the ultrasonic data is used to determine at least one of the following: the distance between the first electronic device and the second electronic device, and the direction of the first electronic device relative to the second electronic device.

In this way, when the lost device is in the power-off state or the power saving mode, the lost device may respond to the instruction from the search device based on the short-range communication module in the operating state, send the broadcast message according to the instruction from the search device through the sparklink module in the operating state, and enable the speaker module in the operating state to send the ultrasonic data, so that the distance between the lost device and the search device, the direction of the lost device relative to the search device, and the like can be determined, to implement precise searching for the lost device. In addition, because sparklink can support a long measurement distance and an ultrasonic wave has a small measurement error and good directivity, the distance between the lost device and the search device, the direction of the lost device relative to the search device, and the like that are obtained through measurement may be more accurate, to increase accuracy of the precise searching.

In a possible design, the first electronic device further includes a speaker module, the speaker module is in an operating state when the first electronic device is in the power-off state or the power saving mode, and the method further includes: The short-range communication module receives a second instruction from the second electronic device; and the short-range communication module enables, in response to the second instruction, the speaker module to ring. According to this design, when the lost device is in the power-off state or the power saving mode, the lost device may still receive the instruction from the search device through the short-range communication module in the operating state, and then ring according to the instruction. In this way, when the search device is located near the lost device, even if the lost device is in the power-off state or the power saving mode, the lost device may still be controlled to ring. This helps the user determine a location of the lost device, to increase a probability of finding the lost device by the user.

In a possible design, the first instruction is encrypted by using a first key, and before the short-range communication module enables, in response to the first instruction, the sparklink module to send the first broadcast message, the method further includes: The short-range communication module decrypts the first instruction by using a second key. In this way, the first instruction is encrypted by using the first key, to implement identity authentication on the first electronic device, and ensure communication security.

In a possible design, before the short-range communication module receives the first instruction from the second electronic device, the method further includes: When the first electronic device is in the power-off state or the power saving mode, the short-range communication module sends a second broadcast message, where the second broadcast message is used to establish a connection to the second electronic device. According to this design, even if the first electronic device is in the power-off state or the power saving mode, the first electronic device may still send the broadcast message through the short-range communication module in the operating state, to connect to the second electronic device, and then communicate with the second electronic device. In a possible design, the second broadcast message carries a third key, and the third key is used for the second electronic device to verify an identity of the first electronic device. In this way, the second broadcast message carries the third key, to implement identity authentication on the second electronic device, and ensure communication security.

In a possible design, when the first electronic device is in the power-off state or the power saving mode, before the short-range communication module sends the second broadcast message, the method further includes: Before the first electronic device enters the power-off state or the power saving mode, the first electronic device generates at least one of the second key and the third key; and the first electronic device sends at least one of the second key and the third key to the short-range communication module. In this way, before entering the power-off state or the power saving mode, the first electronic device generates the second key, the third key, and the like, and sends the second key, the third key, and the like to the short-range communication module. Subsequently, after the first electronic device is in the power-off state or the power saving mode, the short-range communication module may implement identity authentication on the first electronic device, the second electronic device, and the like based on the previously received second key, third key, and the like, to ensure communication security.

In a possible design, when receiving the first instruction in different broadcast periodicities, the short-range communication module decrypts the first instruction by using different second keys; or when the short-range communication module sends the second broadcast message in different broadcast periodicities, the second broadcast message carries different third keys, where the broadcast periodicity is a periodicity in which the short-range communication module sends the second broadcast message. In this way, in different broadcast periodicities, different keys are used to decrypt the first instruction, or the second broadcast message carries different keys. That is, the key dynamically changes. This can reduce a risk of key leakage.

In a possible design, the short-range communication module is a Bluetooth module or a sparklink module.

According to a second aspect, a device search method is provided. The method is applied to a second electronic device. The second electronic device includes a short-range communication module and a sparklink module. The short-range communication module is connected to a first electronic device in a power-off state or a power saving mode. The method includes: The second electronic device sends a first instruction to the first electronic device through the short-range communication module. The second electronic device receives, in response to the first instruction, a first broadcast message from the first electronic device through the sparklink module. The second electronic device outputs, in response to the first broadcast message, at least one of the following: a distance between the first electronic device and the second electronic device, and a direction of the first electronic device relative to the second electronic device.

In a possible design, the second electronic device further includes a microphone module, and that the second electronic device receives, in response to the first instruction, the first broadcast message from the first electronic device through the sparklink module includes: In response to the first instruction, the second electronic device receives the first broadcast message through the sparklink module, and receives ultrasonic data from the first electronic device through the microphone module.

In a possible design, that the second electronic device outputs, in response to the first broadcast message, at least one of the following: the distance between the first electronic device and the second electronic device, and the direction of the first electronic device relative to the second electronic device includes: The second electronic device outputs, in response to the first broadcast message and the ultrasonic data, at least one of the following: the distance between the first electronic device and the second electronic device, and the direction of the first electronic device relative to the second electronic device.

In a possible design, the first instruction is encrypted by using a first key. Before the second electronic device sends the first instruction to the first electronic device through the short-range communication module, the second electronic device encrypts the first instruction by using the first key. Optionally, when the second electronic device sends the first instruction in different broadcast periodicities through the short-range communication module, the first instruction is encrypted by using different first keys. The broadcast periodicity may be a period in which a short-range communication module of the first electronic device sends a second broadcast message.

In a possible design, before the second electronic device outputs, in response to the first broadcast message and the ultrasonic data, at least one of the following: the distance between the first electronic device and the second electronic device, and the direction of the first electronic device relative to the second electronic device, the method further includes: The second electronic device determines, based on the first broadcast message, a first distance between the first electronic device and the second electronic device, and that the first electronic device is located in a first direction of the second electronic device. The second electronic device determines, based on the ultrasonic data, a second distance between the first electronic device and the second electronic device, and that the second electronic device is located in a second direction of the second electronic device. The second electronic device outputs, based on the first distance, the first direction, the second distance, and the second direction, at least one of the following: the distance between the first electronic device and the second electronic device, and the direction of the first electronic device relative to the second electronic device.

In this way, a search device may determine, based on the first broadcast message, a distance between a lost device and the search device and a direction of the lost device relative to the search device; and may further determine, based on the ultrasonic data, a distance between the lost device and the search device and a direction of the lost device relative to the search device. The search device comprehensively determines, based on the foregoing two results, a distance between the lost device and the search device and a direction of the lost device relative to the search device. This can improve accuracy of an obtained distance between the lost device and the search device and an obtained direction of the lost device relative to the search device, to make positioning of the lost device more accurate.

In a possible design, when the first electronic device is in a bag scenario, the output distance between the first electronic device and the second electronic device is the first distance, and the output direction of the first electronic device relative to the second electronic device is the first direction. In this way, when the lost device is in the bag scenario, for example, when the lost device is placed in a backpack or a luggage case, a direction and a distance that are measured based on the first broadcast message are used as a distance and a direction between the lost device and the search device. An ultrasonic wave is likely to be blocked by a bag, affecting measurement accuracy of the ultrasonic wave. Therefore, a measurement result based on the foregoing sparklink broadcast message (namely, the first broadcast message) is used, to improve accuracy of an obtained distance between the lost device and the search device and an obtained direction of the lost device relative to the search device, and reduce an error.

In a possible design, when the first electronic device is in a non-bag scenario, if a distance between the first electronic device and the second electronic device is greater than or equal to a first preset distance, the output distance between the first electronic device and the second electronic device is the first distance, and the output direction of the first electronic device relative to the second electronic device is the first direction; or when the first electronic device is in a non-bag scenario, if a distance between the first electronic device and the second electronic device is less than a first preset distance, the output distance between the first electronic device and the second electronic device is the second distance, and the output direction of the first electronic device relative to the second electronic device is the second direction.

In this way, in the non-bag scenario, if the distance between the search device and the lost device is greater than or equal to the first preset distance, a measurement result based on the sparklink broadcast message (namely, the first broadcast message) is used as a distance, a direction, and the like between the lost device and the search device. Compared with an ultrasonic wave, sparklink can support measurement of a longer distance. Therefore, the measurement result based on the sparklink broadcast message is used, to improve accuracy of an obtained distance between the lost device and the search device and an obtained direction of the lost device relative to the search device. However, when the distance between the search device and the lost device is less than the first preset distance, a measurement result based on the ultrasonic data is used as a distance, a direction, and the like between the lost device and the search device. Compared with sparklink, the ultrasonic data is superior to sparklink in terms of a measurement error and directivity. Therefore, the measurement result based on the ultrasonic data is used, to improve accuracy of an obtained distance between the lost device and the search device and an obtained direction of the lost device relative to the search device.

In a possible design, the first distance and the first direction correspond to a first weight, the second distance and the second direction correspond to a second weight, and the second electronic device outputs, based on the first distance, the first direction, the second distance, the second direction, the first weight, and the second weight, at least one of the following: the distance between the first electronic device and the second electronic device, and the direction of the first electronic device relative to the second electronic device. The first weight and the second weight are different preset weights. In this way, different weights are set for the measurement result based on the sparklink broadcast message (namely, the first broadcast message) and the measurement result based on the ultrasonic data, so that a final measurement result can be determined by measuring the distance and the direction between the lost device and the search device through the foregoing two means. In a possible design, the second electronic device further includes an AR engine, and that the second electronic device determines, based on the first broadcast message, the first distance between the first electronic device and the second electronic device, and that the first electronic device is located in the first direction of the second electronic device includes: The second electronic device determines, based on the first broadcast message and the AR engine, the first distance between the first electronic device and the second electronic device, and that the first electronic device is located in the first direction of the second electronic device. Optionally, the AR engine may be integrated into the sparklink module. In this way, the sparklink module may implement ranging and angle measurement based on sparklink broadcast and the AR engine, to determine the distance between the lost device and the search device, the direction of the lost device relative to the search device, and the like.

In a possible design, the method further includes: When a distance between the first electronic device and the second electronic device is less than a second preset distance, the second electronic device sends a second instruction to the first electronic device through the short-range communication module, where the second instruction instructs the first electronic device to ring. In this way, when determining that the distance between the search device and the lost device is less than the second preset distance, the search device may automatically control the lost device to ring. This enables a user to hear a ringtone of the lost device, to increase a probability of finding the lost device by the user.

In a possible design, that the second electronic device sends the first instruction to the first electronic device through the short-range communication module includes: The second electronic device displays a first interface, where the first interface includes a first control and location information of the first electronic device. In response to an operation on the first control, the second electronic device sends the first instruction to the first electronic device through the short-range communication module. In this way, the user may enable a ranging and angle measurement function of the search device by using a control displayed on the search device, to determine the distance, the direction, and the like between the lost device and the search device.

In a possible design, before the second electronic device sends the first instruction to the first electronic device through the short-range communication module, the method further includes: The second electronic device receives a second broadcast message from the first electronic device through the short-range communication module. The second electronic device connects, in response to the second broadcast message, to the first electronic device through the short-range communication module.

In a possible design, the second broadcast message carries a third key; and before the second electronic device connects, in response to the second broadcast message, to the first electronic device through the short-range communication module, the method further includes: The second electronic device verifies the second broadcast message by using a fourth key. Optionally, the third key may be the same as or different from the fourth key. Optionally, when receiving the second broadcast message in different broadcast periodicities through the short-range communication module, the second electronic device verifies the second broadcast message by using different fourth keys. The broadcast periodicity is a periodicity in which the short-range communication module of the first electronic device sends the second broadcast message.

In a possible design, that the second electronic device outputs, in response to the first broadcast message, at least one of the following: the distance between the first electronic device and the second electronic device, and the direction of the first electronic device relative to the second electronic device includes: In response to a first broadcast message at a first moment, the second electronic device displays one or more of a first distance, a first direction, and first information, where the first distance is a distance between the first electronic device and the second electronic device at the first moment, the first direction is a direction of the first electronic device relative to the second electronic device at the first moment, and the first information represents a confidence of the first direction. In response to a first broadcast message at a second moment, the second electronic device displays one or more of a second distance, a second direction, and second information, where the second distance is a distance between the first electronic device and the second electronic device at the second moment, the second direction indicates a direction of the first electronic device relative to the second electronic device at the second moment, and the second information represents a confidence of the second direction. In this way, the search device may display the direction, the distance, and the like of the lost device, and the user may search for the lost device based on an indication of the search device. This helps the user find the lost device. In a possible design, the first distance is greater than the second distance, and the confidence of the first direction is lower than the confidence of the second direction. In this way, when the search device is increasingly close to the lost device, a direction of the lost device that is measured by the search device is increasingly accurate. This can increase a probability of finding the lost device by the user.

In a possible design, the direction of the first electronic device relative to the second electronic device is represented by an included angle between an orientation of the second electronic device and a direction of a connection line between the first electronic device and the second electronic device.

For descriptions of other designs in the second aspect, refer to descriptions of corresponding designs in the first aspect.

According to a third aspect, a method applied to a device search system is provided. The device search system includes a first electronic device and a second electronic device. Both the first electronic device and the second electronic device include a short-range communication module and a sparklink module. A short-range communication module of the first electronic device and a sparklink module of the first electronic device are in an operating state when the first electronic device is in a power-off state or a power saving mode. The method includes: When the first electronic device is in the power-off state or the power saving mode and the short-range communication module of the first electronic device has established a connection to a short-range communication module of the second electronic device, the short-range communication module of the second electronic device sends a first instruction to the short-range communication module of the first electronic device. The sparklink module of the first electronic device sends, in response to the first instruction, a first broadcast message to a sparklink module of the second electronic device. The second electronic device outputs, in response to the first broadcast message, at least one of the following: a distance between the first electronic device and the second electronic device, and a direction of the first electronic device relative to the second electronic device.

In a possible design, the first electronic device further includes a speaker module, the speaker module is in an operating state when the first electronic device is in the power-off state or the power saving mode, the second electronic device further includes a microphone module, and that the sparklink module of the first electronic device sends, in response to the first instruction, the first broadcast message to the sparklink module of the second electronic device includes:

In response to the first instruction, the sparklink module of the first electronic device sends the first broadcast message, and the speaker module sends ultrasonic data. The sparklink module of the second electronic device receives the first broadcast message, and the microphone module receives the ultrasonic data.

In a possible design, that the second electronic device outputs, in response to the first broadcast message, at least one of the following: the distance between the first electronic device and the second electronic device, and the direction of the first electronic device relative to the second electronic device includes: The second electronic device outputs, in response to the first broadcast message and the ultrasonic data, at least one of the following: the distance between the first electronic device and the second electronic device, and the direction of the first electronic device relative to the second electronic device.

In a possible design, the first electronic device further includes a speaker module, the speaker module is in an operating state when the first electronic device is in the power-off state or the power saving mode, and the method further includes: The short-range communication module of the second electronic device sends a second instruction to the short-range communication module of the first electronic device. In response to the second instruction, the speaker module of the first electronic device rings.

In a possible design, before the short-range communication module of the second electronic device sends the second instruction to the short-range communication module of the first electronic device, the second electronic device determines that a distance between the first electronic device and the second electronic device is less than a second preset distance.

In a possible design, before the short-range communication module of the second electronic device sends the first instruction to the short-range communication module of the first electronic device, the method further includes: The short-range communication module of the first electronic device sends a second broadcast message to the short-range communication module of the second electronic device. In response to the second broadcast message, the short-range communication module of the second electronic device connects to the short-range communication module of the first electronic device.

For other designs of the third aspect, refer to the implementations of the first aspect and the second aspect. It can be understood that, in embodiments of this application, mutual reference may be made between different designs of different aspects.

According to a fourth aspect, an electronic device is provided. The electronic device has a function of implementing the method according to any one of the first aspect, the second aspect, or the designs of the first aspect or the second aspect. The function may be implemented by hardware, or may be implemented by hardware executing corresponding software. The hardware or the software includes one or more modules corresponding to the function.

According to a fifth aspect, an electronic device is provided, and includes a short-range communication module, a sparklink module, a processor, and a memory. The memory is coupled to the processor. The memory is configured to store program code. The program code includes instructions. The processor reads the instructions from the memory, to enable the electronic device to perform the method according to any one of the first aspect, the second aspect, or the designs of the first aspect or the second aspect.

In a possible design, the electronic device is a first electronic device, and at least one of the processor and the memory may be disposed in the short-range communication module. Optionally, in this design, the electronic device further includes a speaker module.

In a possible design, the electronic device is a second electronic device, and at least one of the processor and the memory may be independently disposed. Optionally, in this design, the electronic device further includes a microphone module.

According to a sixth aspect, a computer-readable storage medium is provided. The computer-readable storage medium includes a computer program. When the computer program is run on an electronic device, the electronic device is enabled to perform the method according to any one of the first aspect, the second aspect, or the designs of the first aspect or the second aspect. According to a seventh aspect, a computer program product is provided. The computer program product includes a computer program or instructions. When the computer program or the instructions are run on a computer, the computer is enabled to perform the method according to any one of the first aspect, the second aspect, or the designs of the first aspect or the second aspect. According to an eighth aspect, a device search system is provided, and includes a first electronic device and a second electronic device. The first electronic device is configured to perform the method according to any one of the first aspect or the designs of the first aspect. The second electronic device is configured to perform the method according to any one of the second aspect or the designs of the second aspect.

According to a ninth aspect, this application provides a chip system, including at least one processor and at least one interface circuit. The at least one interface circuit is configured to perform a transceiver function, and send instructions to the at least one processor. When the at least one processor executes the instructions, the at least one processor performs the method according to any one of the first aspect or the designs of the first aspect.

It should be noted that, for technical effects achieved by any design of the third aspect to the ninth aspect, reference may be made to technical effects achieved by corresponding designs of the first aspect and the second aspect. Details are not described herein again.

### BRIEF DESCRIPTION OF DRAWINGS

FIG. 1(1) and FIG. 1(2) are a diagram of a search interface according to an embodiment of this application;
FIG. 2a is a diagram of a device search scenario according to an embodiment of this application;
FIG. 2b is a diagram of an architecture of a communication system according to an embodiment of this application;
FIG. 3 is a diagram of a structure of an electronic device according to an embodiment of this application;
FIG. 4 is a diagram of software structures of an electronic device and a server according to an embodiment of this application;
FIG. 5(1) to FIG. 5(4) are a diagram of an interface for a user to actively enable an offline search function according to an embodiment of this application;
FIG. 6 is a diagram of another interface for enabling an offline search function according to an embodiment of this application;
FIG. 7(1) and FIG. 7(2) are a diagram of another search interface according to an embodiment of this application;
FIG. 8 is a diagram of an angle between a first electronic device and a second electronic device according to an embodiment of this application;
FIG. 9(1) to FIG. 9(4) are a diagram of another search interface according to an embodiment of this application;
FIG. 10 is a diagram of another search interface according to an embodiment of this application;
FIG. 11 is a schematic flowchart of a device search method according to an embodiment of this application;
FIG. 12 is a diagram of a structure of a first electronic device according to an embodiment of this application;
FIG. 13 is a diagram of a second electronic device according to an embodiment of this application;
and
FIG. 14 is a diagram of a chip system according to an embodiment of this application.

### DESCRIPTION OF EMBODIMENTS

In descriptions of this application, "/" indicates an "or" relationship between associated objects, unless otherwise specified. For example, A/B may indicate A or B. In this application, "and/or" describes only an association relationship between associated objects, and indicates that three relationships may exist. For example, A and/or B may indicate the following three cases: Only A exists, both A and B exist, and only B exists, where A and B may be in a singular form or a plural form.

In descriptions of this application, "a plurality of" means two or more, unless otherwise specified. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c, where a, b, and c may be in a singular form or a plural form.

In addition, to clearly describe the technical solutions in embodiments of this application, the terms "first", "second", and the like are used in embodiments of this application to distinguish between identical items or similar items that have basically same functions or purposes. A person skilled in the art can understand that the terms "first", "second", and the like do not limit a quantity or an execution sequence, and the terms "first", "second", and the like do not indicate a definite difference.

To find a lost electronic device, in a possible solution, when the lost electronic device (referred to as a lost device below) is connected to a network, in other words, in a scenario in which the lost device is online, the lost device can receive an instruction from another electronic device based on the connected network, and report a location of the lost device to the another electronic device in real time, to implement online searching for the lost device. This solution can be used only when the lost device is powered on and is connected to a network. The another electronic device may be another device used by a user to search for the lost device, and is referred to as a search device below.

In another possible solution, when the lost device is not connected to a network, in other words, in a scenario in which the lost device is offline, the lost device may send Bluetooth broadcast to a surrounding electronic device. After receiving the Bluetooth broadcast, the surrounding electronic device obtains location information of the surrounding electronic device through a positioning technology, and reports the location information to a search device as a location of the lost device (to be specific, a location at which the lost device goes offline). Then the search device may determine an approximate range of the lost device based on the location information reported by the surrounding electronic device, to implement offline searching for the lost device. In this solution, the lost device may be in a state in which the lost device is powered on but is not connected to a network, or may be in power-off state.

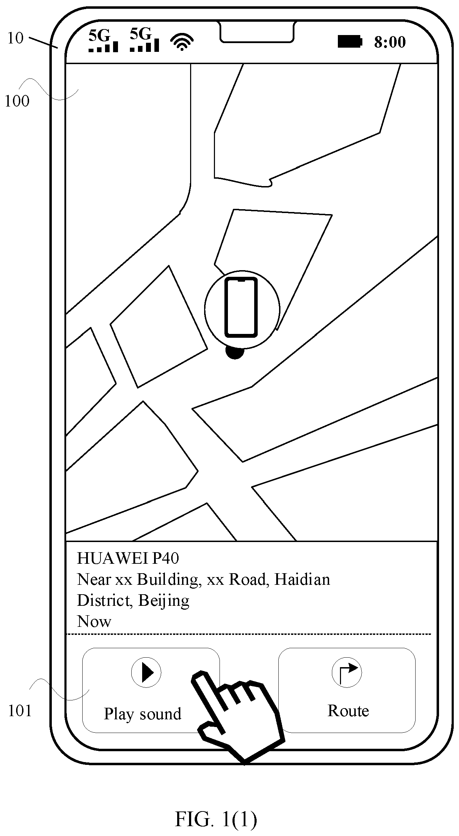

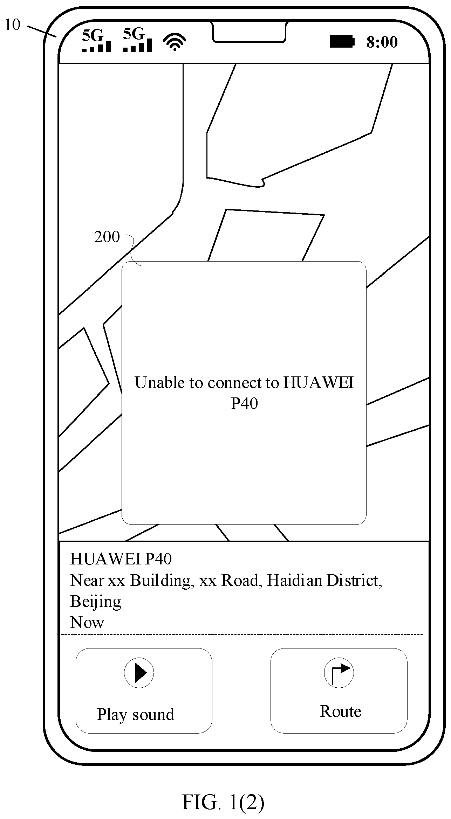

In the foregoing solution of searching for the lost device offline, only the approximate range of the lost device can be determined. When the search device is located near the lost device, a direction, a distance, or the like of the lost device relative to the search device cannot be determined. In addition, when the lost device is in the power-off state, in the offline search solution, the lost device cannot be controlled to ring. For example, the search device is a mobile phone 10. When a user searches for the lost device by using the mobile phone 10, the mobile phone 10 may display a search interface 100 shown in FIG. 1(1), and the search interface 100 may be used to assist the user in searching for the lost device. For example, the search interface 100 may include a Play sound button 101, and the user may expect to trigger, by using the Play sound button 101, the lost device to ring. For example, the user performs a tap operation on the Play sound button 101. In response to the operation of the user, the mobile phone 10 sends, to the lost device, information indicating the lost device to ring. When the lost device is in the power-off state, the lost device does not respond to the mobile phone 10, to be specific, the lost device actually does not ring. Then the mobile phone 10 may display a message 200 indicating that a connection to the lost device fails, as shown in FIG. 1(2). Therefore, the foregoing search solution cannot implement precise searching for the lost device, leading to a low probability of finding the lost device by the user.

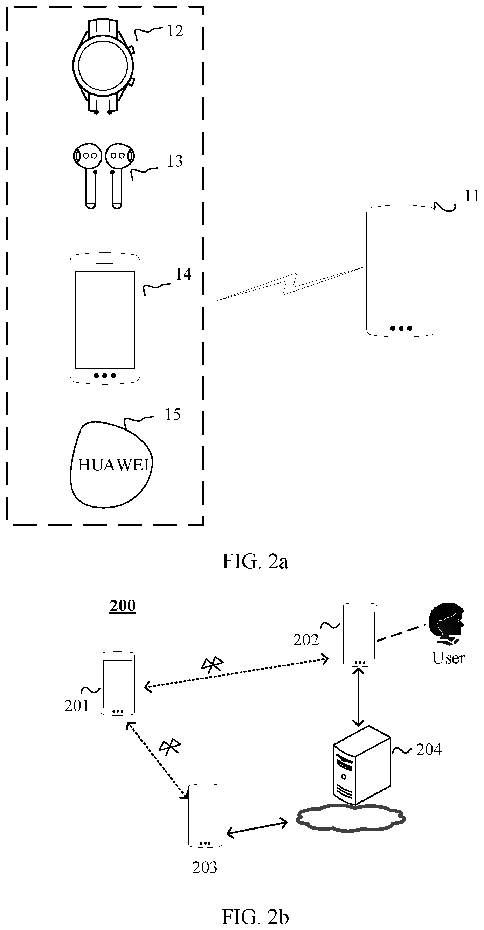

In view of this, embodiments of this application provide a device search method, to not only determine a range in which a lost device is located, but also determine a direction, a distance, and the like of the lost device relative to a search device when the search device is located near the lost device. In addition, the lost device can be controlled to ring in a power-off state, to implement precise searching for the lost device, and increase a probability of finding the lost device by a user. The technical solutions provided in embodiments of this application may be applied to a scenario in which one electronic device is used to search for another electronic device, for example, including but not limited to the following search scenarios: searching for another electronic device (for example, a watch 12, a headset 13, a mobile phone 14, or a tag (TAG) device 15) through a mobile phone 11, as shown in FIG. 2a; searching for a mobile phone through another electronic device (for example, a mobile phone, a tablet computer, or a watch); searching for a watch or a headset through a watch; and the like.

For example, FIG. 2b is a diagram of an architecture of a communication system to which a device search method is applied according to an embodiment of this application. For example, as shown in FIG. 2b, the communication system 200 includes a first electronic device 201 and a second electronic device 202.

The first electronic device 201 is a lost device. The second electronic device 202 may be an electronic device used by a user to search for the first electronic device 201. In this embodiment of this application, the second electronic device 202 has a network connection capability and is in a network-connected state. The network connection capability may mean connecting to the Internet through a wireless fidelity (wireless fidelity, Wi-Fi) network, a cellular network, or the like.

In some embodiments, the first electronic device 201 may have a network connection capability. In this embodiment, in a possible implementation, the first electronic device 201 may be in a network-connected state (this may also be referred to as that the first electronic device 201 is online). The first electronic device 201 may receive a search instruction from the second electronic device 202 through a network. In response to the search instruction, the first electronic device 201 obtains location information of the first electronic device 201 through various positioning technologies, and reports the location information of the first electronic device 201 to the second electronic device 202. Correspondingly, the second electronic device 202 may receive the location information from the first electronic device 201, and then determine a range in which the first electronic device 201 is located. In this implementation, the first electronic device 201 and the second electronic device 202 may communicate with each other through a network.

In another possible implementation, the first electronic device 201 may be in a network-disconnected state (this may also be referred to as that the first electronic device 201 is offline). For example, the first electronic device may be in the network-disconnected state because the first electronic device 201 is in a power-off state, a low-battery-level state, or the like, or the user has disabled a network connection function of the first electronic device 201. In this case, the first electronic device 201 cannot report location information of the first electronic device 201 to the second electronic device 202, but may report location information to the second electronic device 202 through another device. In this implementation, the communication system 200 shown in FIG. 2b may further include a third electronic device 203. Optionally, the third electronic device 203 may be an electronic device located near the first electronic device 201, in other words, is a surrounding electronic device of the first electronic device 201. There may be one or more third electronic devices 203 (FIG. 2b shows only one). In this implementation, the second electronic device 202 and the third electronic device 203 may communicate with each other through a network.

The third electronic device 203 has a positioning assistance capability and a network connection capability. When the third electronic device 203 is in a network-connected state, the third electronic device 203 may serve as an assistant device, and report location information of the third electronic device 203 to the second electronic device 202 as location information of the first electronic device 201, so that the second electronic device 202 determines an approximate range in which the first electronic device 201 is located.

It can be understood that, in the example in the foregoing implementation, the third electronic device 203 is used to assist in positioning when the first electronic device 201 has a network connection capability but is in the network-disconnected state. In some other embodiments, when the first electronic device 201 does not have a network connection capability, the third electronic device 203 may also be used to assist in positioning.

In some embodiments, the first electronic device 201 may establish a connection to the third electronic device 203 through a near field communication technology. For example, the near field communication technology may include but is not limited to Bluetooth, sparklink, infrared, and the like. In FIG. 2b, Bluetooth is used as an example.

In the foregoing solution in which the third electronic device 203 assists in positioning the first electronic device 201, in some embodiments, when the second electronic device 202 is located near the first electronic device 201, the first electronic device 201 may also establish a connection to the second electronic device 202 through a near field communication technology. For example, the near field communication technology may also include but is not limited to Bluetooth, sparklink, infrared, and the like. In FIG. 2b, Bluetooth is used as an example. Based on the connection established through the near field communication technology, the second electronic device 202 may send an instruction for precise searching to the first electronic device 201, to implement precise searching for the first electronic device 201.

Optionally, in this embodiment of this application, the first electronic device 201, the second electronic device 202, and the third electronic device 203 may be electronic devices of a same type or electronic devices of different types.

In some embodiments, the communication system 200 shown in FIG. 2b may further include a server 204. The server 204 may provide a search network service, for example, implement various functions such as encrypted storage of a key and encrypted storage of a location at which the electronic device goes offline. In some embodiments, the server 204 may further implement a function of forwarding communication between different electronic devices (for example, the first electronic device 201, the second electronic device 202, and the third electronic device 203). Optionally, the server 204 may be a device or a network device with a computing function, for example, a cloud server or a network server. The server 204 may be one server, a server cluster including a plurality of servers, or a cloud computing service center.

In some embodiments, the third electronic device 203 may send location information of the third electronic device 203 to the server 204 as location information of the first electronic device 201, and the second electronic device 202 may obtain the location information of the first electronic device 201 from the server 204.

In some embodiments, before entering the network-disconnected state, the first electronic device 201 may further upload, to the server 204 through a network, a key for implementing precise searching for the first electronic device 201. Correspondingly, in a process of searching for the first electronic device 201, the second electronic device 202 may further obtain the key from the server 204.

In this embodiment of this application, the electronic device (for example, the first electronic device 201, the second electronic device 202, and the third electronic device 203) may be a mobile phone, a tablet computer, a handheld computer, a netbook, a personal digital assistant (personal digital assistant, PDA), an artificial intelligence (artificial intelligence, AI) device, a tag (TAG) device, or a wearable device. The wearable device includes but is not limited to a headset, a smartwatch, a smart wristband, a smart ankle band, and the like. An operating system installed on the electronic device includes but is not limited to iOS^{®}, Android^{®}, HarmonyOS^{®}, Windows^{®}, Linux^{®}, or another operating system. Certainly, alternatively, no operating system may be installed. A specific type of the electronic device, whether an operating system is installed on the electronic device, and a type of an installed operating system are not limited in this application.

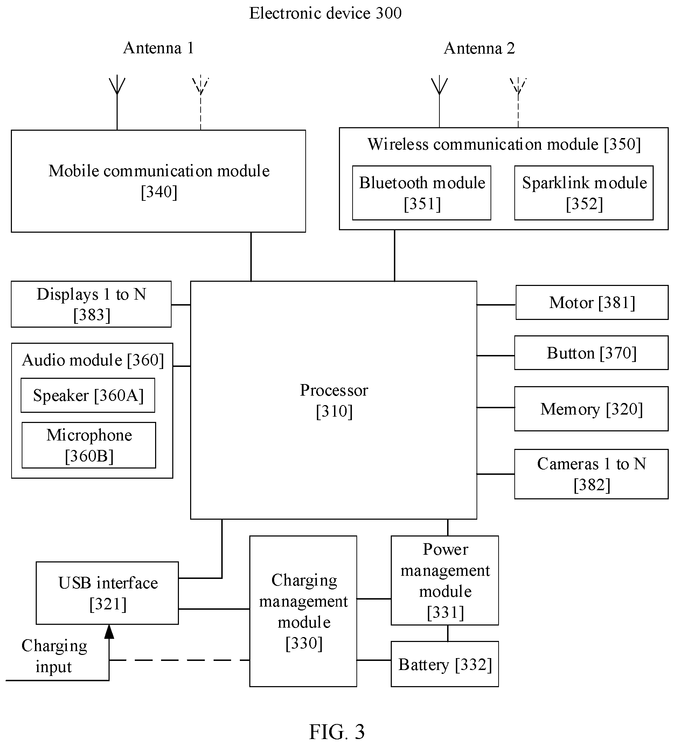

For example, FIG. 3 is a diagram of a structure of an electronic device according to an embodiment of this application.

The electronic device 300 may include a processor 310, a memory 320, a universal serial bus (universal serial bus, USB) interface 321, a charging management module 330, a power management module 331, a battery 332, an antenna 1, an antenna 2, a mobile communication module 340, a wireless communication module 350, an audio module 360, a speaker 360A, a microphone 360B, a button 370, a motor 381, a camera 382, a display 383, and the like.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a timing signal, to control instruction fetching and instruction execution.

A memory may be further disposed in the processor 310 to store instructions and data. In some embodiments, the memory in the processor 310 is a cache. The memory may store instructions or data that has been used or is cyclically used by the processor 310. If the processor 310 needs to use the instructions or the data again, the processor may directly invoke the instructions or the data from the memory. This avoids repeated access, reduces waiting time of the processor 310, and therefore improves system efficiency.

For example, the electronic device 300 is a second electronic device. In some embodiments of this application, the processor 310 may be configured to determine a direction, a distance, and the like of a first electronic device relative to the second electronic device based on one or more of the microphone 360B, augmented reality (augmented reality, AR), a sparklink module, and the like. In some embodiments, the processor 310 may include one or more interfaces, for example, the USB interface 321.

The memory 320 may be configured to store computer-executable program code. The executable program code includes instructions. The memory 320 may include a program storage area and a data storage area. The program storage area may store an operating system, an application for at least one function (for example, a sound play function), and the like. The data storage area may store data created during use of the electronic device 300, and the like. In addition, the memory 320 may include a high-speed random access memory, or may include a non-volatile memory, for example, at least one magnetic disk storage device, a flash memory, or a universal flash storage (universal flash storage, UFS). The processor 310 runs instructions stored in the memory 320 and/or instructions stored in the memory disposed in the processor, to perform various function applications and data processing of the electronic device 300.

For example, the electronic device 300 is a second electronic device. In some embodiments of this application, the memory 320 may be configured to store a key for communicating with a first electronic device, for example, one or more of an offline broadcast key, an identity authentication key, and the like. For descriptions of the keys, refer to the following descriptions.

The charging management module 330 is configured to receive a charging input from a charger. The charger may be a wireless charger or a wired charger.

The power management module 331 is configured to connect to the battery 332, the charging management module 330, and the processor 310. The power management module 331 receives an input from the battery 332 and/or the charging management module 330, and supplies power to the processor 310, the memory 320, the display 383, the camera 382, the wireless communication module 350, and the like.

For example, the electronic device 300 is a first electronic device. In some embodiments of this application, the power management module 331 may be further configured to: when the first electronic device is in a power-off state or a low-battery-level state, supply power to one or more of a Bluetooth module 351, a sparklink module 352, the speaker 360A, and the like.

A wireless communication function of the electronic device 300 may be implemented by the antenna 1, the antenna 2, the mobile communication module 340, the wireless communication module 350, the modem processor, the baseband processor, and the like.

The antenna 1 and the antenna 2 are configured to transmit and receive an electromagnetic wave signal. Each antenna in the electronic device 300 may be configured to cover one or more communication frequency bands. Different antennas may be further reused to improve antenna utilization.

The mobile communication module 340 may provide a solution applied to the electronic device 300 for wireless communication such as 2G, 3G, 4G, and 5G.

The wireless communication module 350 may provide a solution applied to the electronic device 300 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or sparklink. The wireless communication module 350 may be one or more components integrating at least one communication processing module.

In some embodiments, in the electronic device 300, the antenna 1 is coupled to the mobile communication module 340, and the antenna 2 is coupled to the wireless communication module 350, so that the electronic device 300 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

In some embodiments of this application, the wireless communication module 350 includes one or more of the Bluetooth module 351, the sparklink module 352, and the like. For example, the electronic device 300 is a first electronic device. When the first electronic device is in a network-disconnected state, for example, the first electronic device may perform Bluetooth broadcast through the Bluetooth module 351, so that a second electronic device or a third electronic device can discover the first electronic device; or for another example, the first electronic device may perform sparklink broadcast through the sparklink module 352, so that a second electronic device determines a direction, a distance, and the like of the first electronic device.

In some embodiments of this application, for example, the electronic device 300 is still the first electronic device. A memory may be further disposed in the Bluetooth module 351. The memory may be configured to store a key for communicating with the first electronic device, for example, a plurality of keys such as an offline broadcast key and an identity authentication key.

The audio module 360 is configured to convert digital audio information into an analog audio signal for output, and is also configured to convert an analog audio input into a digital audio signal. The audio module 360 may be further configured to encode and decode an audio signal. In some embodiments, the audio module 360 may be disposed in the processor 310, or some functional modules of the audio module 360 are disposed in the processor 310.

The speaker 360A, also referred to as a "loudspeaker", is configured to convert an audio electrical signal into a sound signal. For example, the electronic device is a first electronic device. In some embodiments of this application, when the first electronic device is in a power-off state or a low-battery-level state, the speaker 360A may ring according to an instruction of a second electronic device, or the speaker 360A may transmit an ultrasonic wave according to an instruction of a second electronic device.

The microphone 360B, also referred to as a "mike" or a "mic", is configured to convert a sound signal into an electrical signal. At least one microphone 360B may be disposed in the electronic device 300, to implement one or more of the following: collecting a sound signal, implementing noise reduction, recognizing a sound source, implementing a directional recording function, and the like. For example, the electronic device is a second electronic device. In some embodiments of this application, the microphone 360B may be configured to collect an ultrasonic wave transmitted by a first electronic device, to implement precise positioning of the first electronic device.

The button 370 includes a power button, a volume button, and the like. The button 370 may be a mechanical button or a touch button.

The motor 381 may generate a vibration prompt. The motor 381 may be configured to produce an incoming call vibration prompt or a touch vibration feedback. For example, the electronic device 300 is a first electronic device. In some embodiments of this application, when the first electronic device is in a power-off state or a low-battery-level state, the motor 381 may vibrate according to an instruction of a second electronic device. In this embodiment, when the first electronic device is in the power-off state or the low-battery-level state, the power management module 331 may be further configured to supply power to the motor 381.

The camera 382 is configured to capture a static image or a video. In some embodiments, the electronic device 300 may include one or N cameras 382, where N is a positive integer greater than 1. For example, the electronic device 300 is a second electronic device. In some embodiments of this application, the camera 382 may be further configured to capture an image of a surrounding environment of the second electronic device, to implement precise searching for a first electronic device.

The display 383 is configured to display an image, a video, or the like. The display 383 includes a display panel. In some embodiments, the electronic device 300 may include one or N displays 383, where N is a positive integer greater than 1. For example, the electronic device is a second electronic device. In some embodiments of this application, the display 383 may be configured to output a location of a first electronic device, a direction and a distance of the first electronic device relative to the second electronic device, and the like.

It can be understood that, when the electronic device 300 is implemented as different electronic devices (for example, the first electronic device, the second electronic device, and the third electronic device), modules included in the electronic device 300 may vary. For example, when the electronic device 300 is implemented as the first electronic device, the electronic device 300 may not include the microphone 360B, the camera 382, or the display 383; or when the electronic device 300 is implemented as the second electronic device, the electronic device 300 may not include the speaker 360A or the motor 381.

For a structure of a server, refer to the structure of the electronic device shown in FIG. 3. It can be understood that the server may include more or fewer components than those of the electronic device shown in FIG. 3. For example, the server may include only a processor, a memory, and a communication interface.

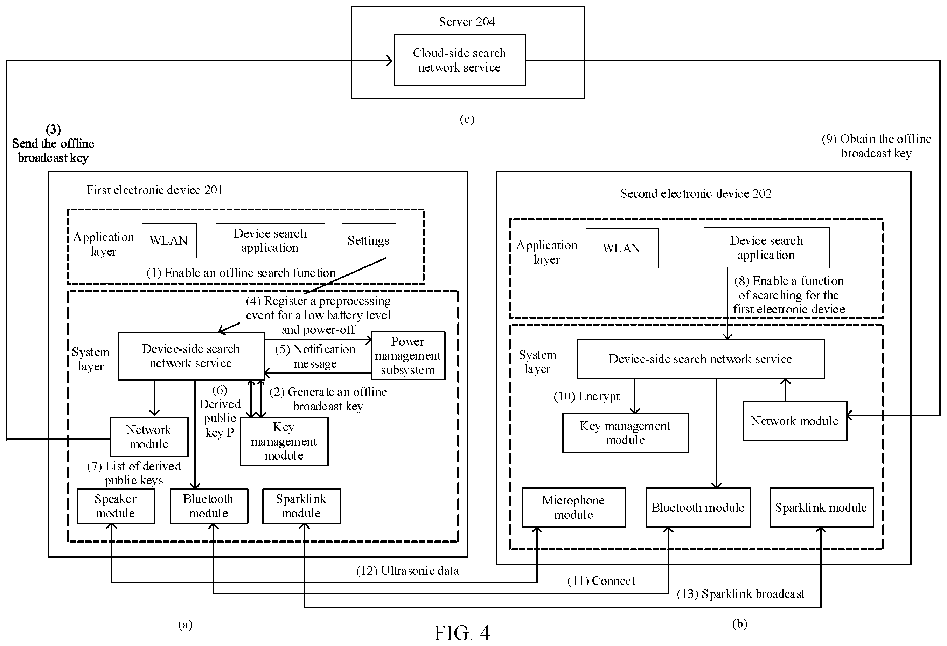

For example, FIG. 4 is a diagram of a software architecture of an electronic device and a server according to an embodiment of this application.

A software system of the electronic device may use a hierarchical architecture, an event-driven architecture, a microkernel architecture, a microservice architecture, or a cloud architecture. In this embodiment of the present invention, the hierarchical architecture is used as an example to describe software structures of a first electronic device and a second electronic device. (a) in FIG. 4 and (b) in FIG. 4 are diagrams of a software structure of a first electronic device 201 and a software structure of a second electronic device 202 respectively.

In the hierarchical architecture, software is divided into several layers, and each layer has a clear role and task. The layers communicate with each other through a software interface. In some embodiments, both a software architecture of the first electronic device 201 and a software architecture of the second electronic device 202 may include an application layer and a system layer. It can be understood that types of the layers shown in FIG. 4 and locations of modules at the layers are merely examples for description. During actual application, other layer division may alternatively be used. For example, the system layer may be further divided into a framework layer and a kernel layer. The locations of the modules at the layers may also vary.

The application layer may include a series of application packages, for example, a WLAN, a device search application, and a settings application. The WLAN may be configured to implement a network connection function of the electronic device. The device search application may be configured to receive an input operation of a user, to implement pairing and binding between devices based on a search network service, and trigger a local device to query for a location of a lost device. The settings application may be configured to perform various settings, for example, enabling an offline search function of the first electronic device 201.

The system layer may include a series of system services and functional modules, for example, a device-side search network service, a network module, a key management module, a speaker module, a Bluetooth module, a sparklink module, a microphone module, and a power management subsystem. The device-side search network service may be configured to provide encrypted reporting of location information of an assistant device and other functions. The power management subsystem may be configured to be responsible for battery level management of the electronic device, including but not limited to monitoring a battery level and a power-on/off state, power supply management, and the like. The network module may be configured to be responsible for providing a network connection service, so that the electronic device can communicate with another device through a network. The key management module may be configured to perform a series of key-related operations such as key generation, storage, management, and decryption. For example, the key includes but is not limited to an offline broadcast key, an identity authentication key, and the like. Optionally, the key management module may be a universal key store system (HarmonyOS Universal KeyStore, HUKS), where the HUKS may provide an application with an interface function of a Java Cryptography Architecture KeyStore class, including a cryptographic algorithm, key management, a certificate service, and the like; or may be another key management module.

The speaker module is configured to ring, transmit an ultrasonic wave, and the like, to determine a direction, a distance, and the like of the first electronic device relative to the second electronic device. As a short-range communication module, the Bluetooth module may be configured to provide services such as low-energy offline broadcast, offline broadcast scanning, and generic attribute profile (generic attribute, GATT) connection. GATT is a service interface protocol of BLE (Bluetooth Low Energy). As a long-range communication module, the sparklink module may be configured to provide services such as sparklink low energy (sparklink low energy, SLE) broadcast and broadcast scanning. The microphone module may be configured to receive ultrasonic data, to determine a direction, a distance, and the like of the first electronic device relative to the second electronic device.

As shown in (c) in FIG. 4, the server 204 includes a cloud-side search network service. The cloud-side search network service is a service deployed for a search network on the server side, and may be configured to implement functions such as encrypted storage of a key and encrypted storage of a location of a lost device.

It can be understood that the structures shown in this embodiment of this application do not constitute a specific limitation on the electronic device or the server. In some other embodiments of this application, the electronic device and the server may include more or fewer components than those shown in the figure, or some components may be combined, or some components may be split, or the components may be arranged differently. The components shown in the figure may be implemented by hardware, software, or a combination of software and hardware.

All technical solutions in the following embodiments may be implemented by a device of the structures shown in FIG. 3 and FIG. 4 and a system of the architecture shown in FIG. 2b. It can be understood that, in embodiments of this application, an example in which a first electronic device serves as a lost device, the first electronic device is in a power-off state after being lost, a second electronic device serves as a search device, and a third electronic device serves as a surrounding electronic device of the first electronic device is used for description. It can be understood that, when the first electronic device is in a low-battery-level state (for example, a power saving mode) after being lost, the technical solutions provided in embodiments of this application are also applicable.

In some embodiments, a connection may be first established between the first electronic device and the second electronic device. Then the second electronic device may send, based on the established connection, an instruction for implementing precise searching to the first electronic device, and then determine a direction, a distance, and the like of the first electronic device relative to the second electronic device, to implement precise searching of the second electronic device.

The following first describes a process of establishing a connection between the first electronic device and the second electronic device.

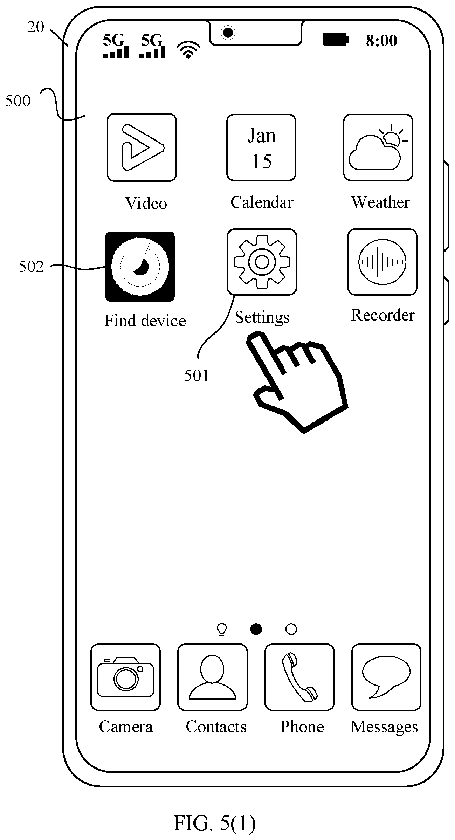

In some embodiments, the first electronic device may perform (1) shown in FIG. 4: Enable an offline search function. After the offline search function is enabled, even if the first electronic device is in a power-off state or a low-battery-level state, the first electronic device may still be discovered and connected by the second electronic device. In this embodiment, in a possible implementation, the offline search function may be actively enabled by a user. For example, the first electronic device is a mobile phone 20. FIG. 5(1) to FIG. 5(4) are a diagram of actively enabling an offline search function by a user according to an embodiment of this application.

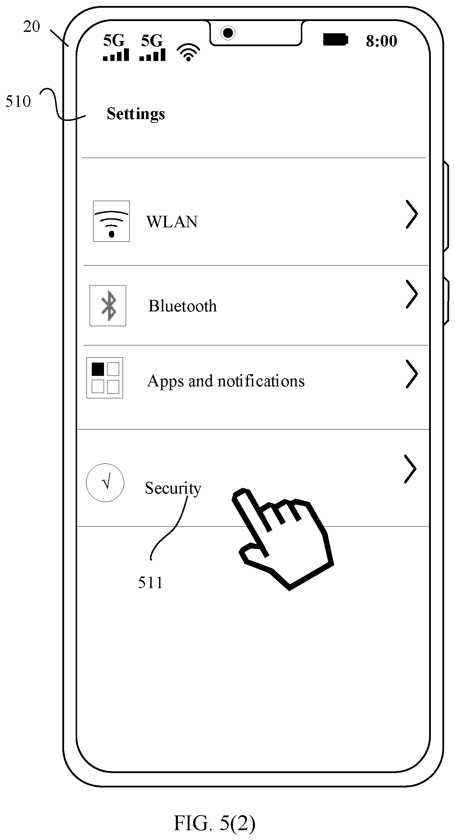

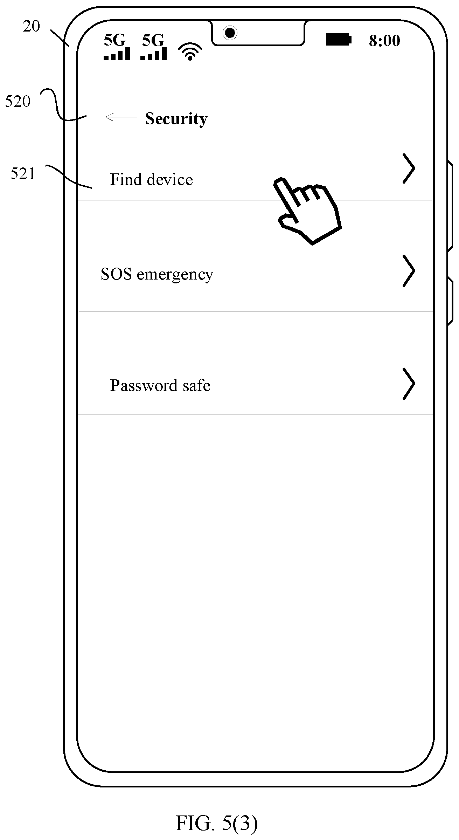

In some embodiments, an application for enabling the offline search function may be installed on the mobile phone 20, and the user may enable the offline search function by using the application. For example, the application is a Settings application. For example, as shown in FIG. 5(1), the mobile phone 20 may display a home screen 500. The home screen 500 may include an icon of one or more applications, for example, an icon of a Calendar application and an icon of a Clock application. Details are not described herein. Icons of different applications may be used to start running interfaces of corresponding applications. The icon of the one or more applications includes an icon 501 of the Settings application. The mobile phone 20 detects an operation of tapping the icon 501 of the Settings application by the user, or the like. In response to the operation, the mobile phone 20 displays a running interface 510 of the Settings application, as shown in FIG. 5(2). The running interface 510 of the Settings application includes one or more function options, and different function options may be used to perform different setting operations. For example, the mobile phone 20 detects a tap operation of the user for a Security option 511. In response to the operation, the mobile phone 20 displays a Security interface 520, as shown in FIG. 5(3). The Security interface 520 includes a Find device option 521. The user may enable the offline search function by using the Find device option 521. Optionally, the Security interface 520 further includes an SOS emergency option, a Password safe option, and the like. Functions of the options are not described in detail in this specification.

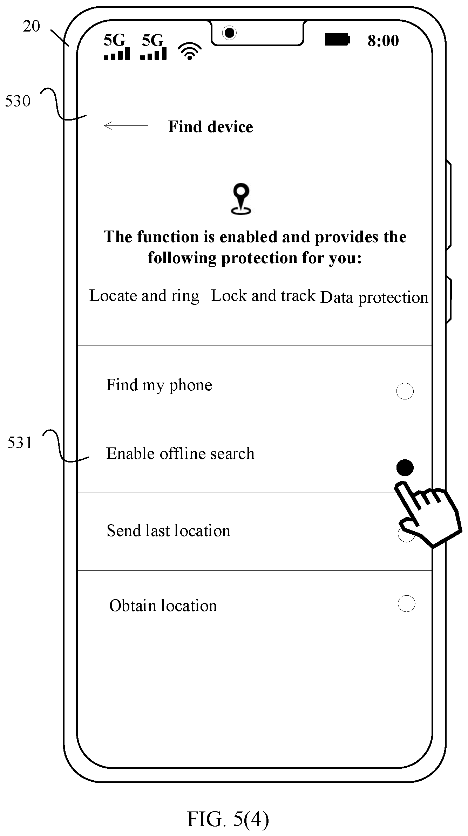

For example, the mobile phone 20 detects a tap operation of the user for the Find device option 521. In response to the operation, the mobile phone 20 displays a Find device interface 530, as shown in FIG. 5(4). The Find device interface 530 includes a button 531 for enabling the offline search function. For example, the mobile phone 20 enables the offline search function in response to an operation of selecting, by the user, the button 531 for enabling the offline search function. In this way, even if the mobile phone 20 is in a power-off state after being lost, the mobile phone 20 may still be discovered and connected by a search device.

Certainly, in another implementation, the offline search function may alternatively be enabled by the first electronic device by default. For example, the first electronic device may automatically enable the offline search function after delivery. A specific manner of enabling the offline search function is not limited in this embodiment of this application.

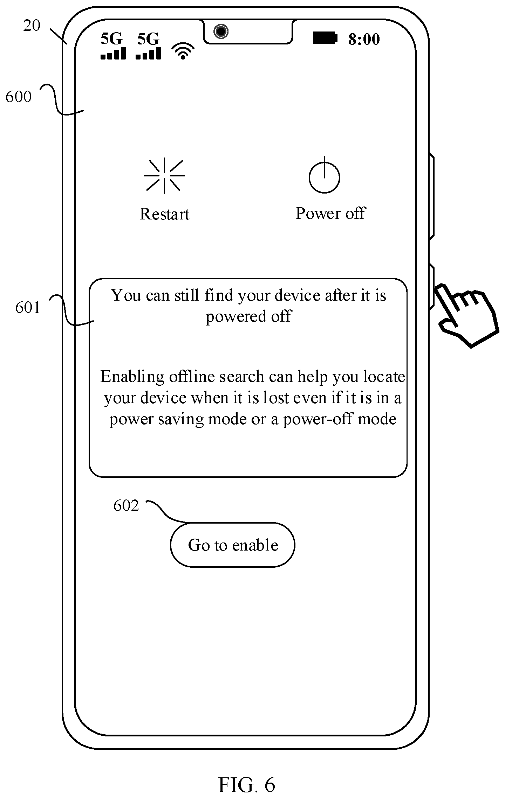

In some embodiments, before the first electronic device is lost, the user may perform an operation of powering off the first electronic device. In this embodiment, before the first electronic device is powered off in response to the power-off operation of the user, the first electronic device may further display a reminder message, to prompt the user to enable the offline search function or the like. For example, the first electronic device is still the mobile phone 20. As shown in FIG. 6, the user may perform, on the mobile phone 20, a power-off operation of pressing-and-holding a power button. In response to the operation of the user, the mobile phone 20 may display a power-off interface 600 shown in FIG. 6. The power-off interface 600 may include a reminder message 601 and a "Go to enable" button 602. The reminder message 601 may be used to output a related description of the offline search function, advantages of enabling the offline search function, and the like. The "Go to enable" button 602 may be used to jump to an interface for enabling the offline search function of the mobile phone 20, for example, the interface shown in FIG. 5(4) or the interface shown in FIG. 5(3). A specific interface to be jumped to is not limited in this embodiment of this application. Then, after enabling the offline search function in response to a user operation, the mobile phone 20 may further prompt the user to confirm whether to continue to power off the mobile phone, or the like. Certainly, when the user chooses not to enable the offline search function of the mobile phone 20, the user may alternatively not perform the foregoing operation, and may directly control, based on a Restart button, a Power off button, or the like displayed on the power-off interface 600, the mobile phone 20 to be powered off.

After the offline search function of the first electronic device is enabled in the foregoing manner, the second electronic device may discover and connect to the first electronic device when the first electronic device is in the power-off state. In some embodiments, the second electronic device and the first electronic device may establish a connection through a near field communication technology. For example, the near field communication technology may include but is not limited to Bluetooth, sparklink, and the like. In this embodiment of this application, Bluetooth is used as an example for description.

In this embodiment of this application, when the first electronic device is in the power-off state, a Bluetooth module of the first electronic device still keeps operating. To be specific, when the first electronic device is in the power-off state, the first electronic device keeps supplying power to the Bluetooth module. Correspondingly, the Bluetooth module of the first electronic device periodically sends Bluetooth broadcast in the power-off state. Therefore, when the second electronic device is located near the first electronic device, the second electronic device may perform (11) shown in FIG. 4: A device-side search network service of the second electronic device invokes a Bluetooth module of the second electronic device. The Bluetooth module can discover the first electronic device by scanning for Bluetooth broadcast of the first electronic device and establish a connection to the first electronic device. Optionally, the Bluetooth broadcast sent by the first electronic device may carry a derived public key P of an offline broadcast key. The derived public key P of the offline broadcast key may be used for the second electronic device to recognize an identity of the first electronic device, to improve security of the first electronic device. In this way, even if the first electronic device is in the power-off state, the Bluetooth module still keeps operating, so that the first electronic device can still establish a communication connection to the second electronic device when the first electronic device is in the power-off state.

Optionally, when the first electronic device is in the power-off state, the Bluetooth module of the first electronic device may be in an independent operating state. To be specific, the Bluetooth module may autonomously operate without receiving a control instruction from another module. In some embodiments, the derived public key P of the offline broadcast key may be periodically updated, for example, may vary with Bluetooth broadcast sent by the first electronic device on different occasions. To be specific, each time the Bluetooth module of the first electronic device performs Bluetooth broadcast, the Bluetooth broadcast carries a different derived public key P of the offline broadcast key. This can improve security of the first electronic device. Optionally, because a key has specific time validity, in a possible implementation, the first electronic device may generate the derived public key P of the offline broadcast key right before entering the power-off state. Specifically, after the first electronic device enables the offline search function in the foregoing manner, a device-side search network module of the first electronic device may perform (4) shown in FIG. 4: Register a preprocessing event for a low battery level and power-off with a power management subsystem of the first electronic device. When the first electronic device is to enter the low-battery-level state or the power-off state, the power management subsystem may notify the device-side search network module of the preprocessing event for a low battery level and power-off, so that the first electronic device can generate the derived public key P of the offline broadcast key in a timely manner.

Correspondingly, when the power management subsystem of the first electronic device determines that the first electronic device is to enter the power-off state, for example, when a remaining battery level of the first electronic device is less than or equal to a preset battery level threshold (for example, 1% or 5%), the power management subsystem may perform (5) shown in FIG. 4: Send a notification message to the device-side network search module. Then the device-side network search module may perform (6) shown in FIG. 4: Generate the derived public key P of the offline broadcast key through a key management module. For example, the Bluetooth module performs Bluetooth broadcast once every 15 minutes. If the Bluetooth module performs Bluetooth broadcast for two days, the key management module needs to generate 96 keys. It can be understood that, in this embodiment of this application, frequency, duration, and the like of performing Bluetooth broadcast by the Bluetooth module are not limited. Finally, the device-side search network module of the first electronic device performs (7) shown in FIG. 4: Send, to the Bluetooth module, a list of derived public keys (namely, a plurality of derived public keys P generated above) of the offline broadcast key that are generated by the key management module. In this way, after the first electronic device is powered off, the Bluetooth module can perform Bluetooth broadcast based on the list of derived public keys of the offline broadcast key.

Correspondingly, the second electronic device may decrypt the Bluetooth broadcast by using the offline broadcast key, to determine that the Bluetooth broadcast is sent by the first electronic device, and recognize the identity of the first electronic device. For example, the second electronic device may perform derivation on the offline broadcast key based on a derivation algorithm the same as that used by the first electronic device. For example, the device-side search network service of the second electronic device may invoke a key management module to perform derivation on the offline broadcast key. When a key obtained by the second electronic device through derivation matches the public key P carried in the Bluetooth broadcast, the Bluetooth broadcast of the first electronic device may be decrypted. Further, it can be determined that the Bluetooth broadcast is sent by the first electronic device.

For example, the derivation algorithm may be an elliptic curve Diffie-Hellman key exchange (Elliptic Curve Diffie-Hellman key Exchange, ECDH) algorithm; or certainly, may be another derivation algorithm. This is not limited in this embodiment of this application.

Certainly, in another implementation, the first electronic device may alternatively directly send the generated list of derived public keys of the offline broadcast key to the server, and then the second electronic device may alternatively directly obtain the list of derived public keys of the offline broadcast key from the server, and recognize the identity of the first electronic device based on the list of derived public keys of the offline broadcast key.

Optionally, the second electronic device may perform (9) shown in FIG. 4: The device-side search network service may invoke a network module to obtain the offline broadcast key from the server. For example, in addition to performing the operation of generating the derived public key of the offline broadcast key, the first electronic device may further generate the offline broadcast key, and upload the offline broadcast key to the server. For example, after the first electronic device enables the offline search function in the foregoing manner, the device-side search network module of the first electronic device may perform (2) shown in FIG. 4: Invoke the key management module to generate the offline broadcast key. Correspondingly, the key management module may generate the offline broadcast key, and send the offline broadcast key to the search network module. Then the search network module may invoke a network module, and the network module performs (3) shown in FIG. 4: Send the offline broadcast key to the server.

In some implementations, to ensure security and privacy of the first electronic device, the key management module may further encrypt the offline broadcast key into ciphertext through MagicRing. To be specific, the first electronic device sends an encrypted offline broadcast key to the server. It can be understood that MagicRing is a technology that can implement interworking and interconnection between a chip platform and an operating system. Correspondingly, after obtaining the encrypted offline broadcast key from the server, the second electronic device may further decrypt the encrypted offline broadcast key first. For example, after obtaining the encrypted offline broadcast key from the server, the search network module of the second electronic device may send the encrypted offline broadcast key to the key management module. Correspondingly, the key management module may also decrypt the encrypted offline broadcast key through MagicRing.

It can be understood that the second electronic device may alternatively obtain the offline broadcast key in another manner. A manner of obtaining the offline broadcast key by the second electronic device is not limited in this embodiment of this application.

It can be further understood that, in the foregoing embodiment, the second electronic device recognizes the identity of the first electronic device based on the offline broadcast key; and in another embodiment, the second electronic device may alternatively recognize the identity of the first electronic device in another manner. For example, the Bluetooth broadcast sent by the first electronic device may carry an identifier of the first electronic device, and the identifier may be used to recognize the identity of the first electronic device. The second electronic device may alternatively recognize the identity of the first electronic device based on the identifier of the first electronic device that is carried in the Bluetooth broadcast.

In some scenarios, the second electronic device may not be located near the first electronic device.

Therefore, the second electronic device may be unable to establish a connection to the first electronic device in the foregoing manner of scanning for Bluetooth broadcast. In this scenario, the second electronic device may alternatively first obtain a range in which the first electronic device is located, and output the range in which the first electronic device is located to the user, so that the user carries the second electronic device to a location near the first electronic device when searching for the first electronic device.

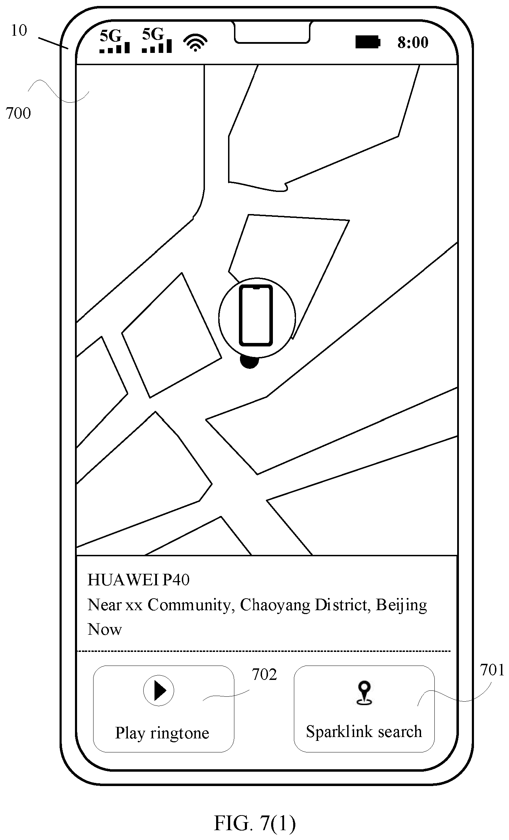

In this scenario, in a possible implementation, an application for searching for the first electronic device may be installed on the second electronic device, and the user may search for the first electronic device by using the application. To be specific, the second electronic device may perform (8) shown in FIG. 4: Enable, through a device search application, a function of searching for the first electronic device. Then the second electronic device may output a location of the first electronic device to the user through the application. For example, the application is a Find device application, and the second electronic device is a mobile phone 10. The mobile phone 10 may also display the home screen 500 shown in FIG. 5(1). An icon 502 of the Find device application may be displayed on the home screen 500. The user may enable searching for the first electronic device by using the icon 502 of the Find device application. For example, the mobile phone 10 detects a tap operation of the user for the icon 502 of the Find device application. In response to the operation, the mobile phone 10 may display a location of the first electronic device (for example, HUAWEI P40), for example, "Near xx Community, Chaoyang District, Beijing", on a search interface 700 shown in FIG. 7(1). Then the user may carry, based on the location of the first electronic device that is displayed on the mobile phone 10, the mobile phone 10 to a location near the location of the first electronic device, to further implement precise searching for the first electronic device.

In some implementations, to increase a probability of connecting to the first electronic device, after the user performs an operation to enable searching for the first electronic device, the second electronic device may enable the Bluetooth module to start to scan for Bluetooth broadcast of the first electronic device. To be specific, the second electronic device may periodically scan for Bluetooth broadcast of the first electronic device during an entire search process. In some other implementations, to reduce power consumption of the second electronic device, the second electronic device may enable the Bluetooth module to start to scan for Bluetooth broadcast of the first electronic device when determining that the second electronic device is located near the first electronic device. For example, when determining that a distance between the second electronic device and the location of the first electronic device is less than a specific threshold, the second electronic device may determine that the second electronic device is located near the first electronic device. Optionally, in this case, because the second electronic device has not performed precise searching for the first electronic device, the location of the first electronic device may be, for example, the location of the first electronic device that is output by the second electronic device to the user in FIG. 7(1).

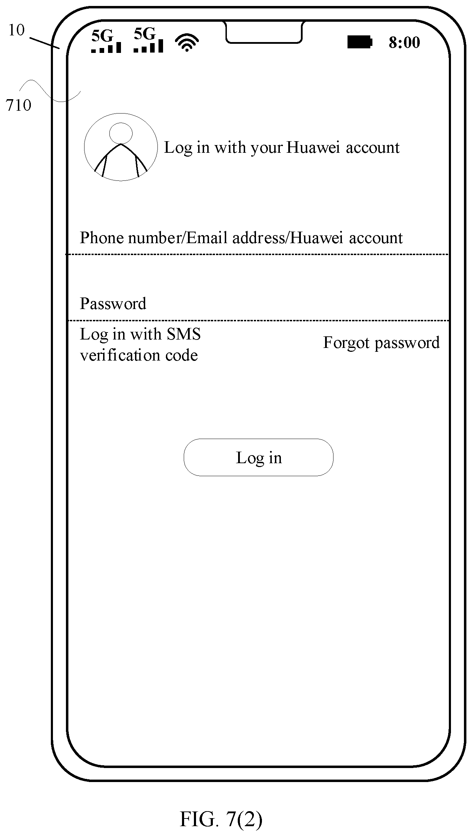

In some embodiments, when the second electronic device displays the location of the first electronic device shown in FIG. 7(1), the second electronic device may alternatively first log in to the Find device application. For example, the second electronic device is still the mobile phone 10. In response to a tap operation of the user for the icon 502 of the Find device application shown in FIG. 5(1), in response to the operation, the mobile phone 10 may first display a login interface 710 of the Find device application, as shown in (2) in FIG. 7. The user may enter an account, a password, and the like on the login interface 710. In response to a login operation of the user, the mobile phone 10 jumps to the interface shown in FIG. 7(1). Optionally, a login account for the Find device application on the second electronic device may be a login account for a Find device application on the first electronic device, or a system account of the first electronic device, or an account that has a preset association relationship (for example, belonging to a same group (for example, a location sharing group or a family group) or being familiarity accounts) with the foregoing account. This is not specifically limited in this embodiment of this application.

In this embodiment of this application, because the first electronic device is in the power-off state, the first electronic device is not connected to a network, and the first electronic device cannot directly report location information of the first electronic device to the second electronic device. To be specific, location information shown in FIG. 7(1) is not reported by the first electronic device. In a possible implementation, the location information may be location information of the third electronic device that is reported by the third electronic device. For example, the third electronic device may scan for Bluetooth broadcast. When obtaining Bluetooth broadcast of the first electronic device through scanning, the third electronic device may report the location information of the third electronic device to the second electronic device as location information of the first electronic device. It can be understood that a manner of obtaining, by the third electronic device, the location information and reporting the location information to the second electronic device is not limited in this embodiment of this application.

Optionally, in this embodiment of this application, the connection established between the first electronic device and the second electronic device may be a GATT connection; or certainly, may be a Bluetooth connection based on another communication protocol.

The foregoing describes the process of establishing the connection between the first electronic device and the second electronic device. The following describes how the second electronic device sends, based on the established connection, an instruction for implementing precise searching to the first electronic device.

In some embodiments, the instruction for implementing precise searching may include a ranging and angle measurement instruction, and the ranging and angle measurement instruction may be used to determine at least one of a direction, a distance, and the like of the first electronic device relative to the second electronic device. In a possible implementation, at least one of the direction, the distance, and the like of the first electronic device relative to the second electronic device may be determined based on a sparklink module. In this implementation, after the first electronic device establishes the connection to the second electronic device, the second electronic device may send a ranging and angle measurement instruction to the first electronic device. The ranging and angle measurement instruction may instruct the first electronic device to perform sparklink broadcast (for example, SLE broadcast). In this implementation, when the first electronic device is in the power-off state, the sparklink module is still in an operating state, to be specific, the first electronic device still keeps supplying power to the sparklink module.

Specifically, based on the architecture shown in FIG. 4, after the Bluetooth module of the second electronic device establishes a connection to the Bluetooth module of the first electronic device, the device-side search network service of the second electronic device generates a ranging and angle measurement instruction, and delivers the instruction to the Bluetooth module of the second electronic device. Then the Bluetooth module of the second electronic device sends the ranging and angle measurement instruction to the Bluetooth module of the first electronic device based on the established Bluetooth connection. Correspondingly, after receiving the ranging and angle measurement instruction, the Bluetooth module of the first electronic device performs, according to the instruction, (13) shown in FIG. 4: Enable a sparklink module of the first electronic device to start to perform sparklink broadcast. In addition, a sparklink module of the second electronic device starts to scan for sparklink broadcast of the first electronic device. At least one of the direction, the distance, and the like of the first electronic device relative to the second electronic device is measured based on sparklink broadcast of the first electronic device that is obtained through scanning.

In some embodiments, the second electronic device may determine the distance between the first electronic device and the second electronic device based on a carrier phase in a sparklink broadcast signal of the first electronic device. Alternatively, the second electronic device may determine the distance between the first electronic device and the second electronic device based on strength of a sparklink broadcast signal of the first electronic device. For example, a correspondence between strength of a sparklink broadcast signal and a distance may be preset on the second electronic device. In this way, the second electronic device may determine the distance between the second electronic device and the first electronic device based on the correspondence and strength of a received sparklink broadcast signal of the first electronic device.

In some embodiments, an AR module is integrated in the sparklink module, and the second electronic device may determine the direction of the first electronic device relative to the second electronic device based on the AR module. The AR module may be any AR technology that can implement motion tracking, environment tracking, human body tracking, face tracking, or the like. For example, the AR module may be an integrated AR development toolkit, including but not limited to one or more of an AR engine, an AR kit, an AR core, and the like. In other words, the AR technology is integrated in the sparklink module. Optionally, the AR module may be implemented by hardware, or may be implemented by a combination of software and hardware. When the second electronic device sends the ranging and angle measurement instruction to the first electronic device in the foregoing manner, the second electronic device may further enable the AR module to perform a process of determining the direction of the first electronic device relative to the second electronic device. The following describes the process by using an example in which the AR module is the AR engine (AR Engine). It can be understood that the AR engine service is an engine for constructing an augmented reality application in a device system. The AR engine integrates an AR core algorithm to provide basic AR capabilities such as motion tracking, environment tracking, human body tracking, and face tracking.

The sparklink module may enable the AR engine to obtain virtual spatial coordinates of the second electronic device. Specifically, during this process, the AR engine drives a camera of the second electronic device to capture an image of an environment around the second electronic device, and selects a relative location and an orientation by using the second electronic device as a reference object, to construct a virtual spatial coordinate system. Then the environment image obtained by the camera is transmitted to a knowledge base (for example, a DLL library), and an image comparison algorithm is invoked to perform image comparison and recognize image data. Matrix transformation (for example, a plurality of times of dense perspective transformation) is performed on the image data. Real data captured by the camera is compared with and gradually aligned with the recognized image data, and a displacement difference is used as a relative displacement of the image. A location of a virtual object is determined based on a location of the image. A real image is converted into a location relative to the second electronic device, and the location is returned to the AR engine. A displacement scale and a size of the virtual object are modified and adjusted, to ensure that a spatial size of the virtual object is in a correct proportion to originally constructed virtual space. It can be understood that the virtual spatial coordinates of the second electronic device may be coordinates in the constructed virtual spatial coordinate system.

Further, the sparklink module may determine the direction of the first electronic device relative to the second electronic device based on the virtual spatial coordinates of the second electronic device that are obtained by the AR engine. In this way, because sparklink can measure a long effective distance, the distance, the direction, and the like between the first electronic device and the second electronic device are measured through sparklink. This can not only implement searching for a lost device when the lost device is in a power-off state or a low-battery-level state, but also implement measurement of a distance, a direction, and the like when the lost device is far away from a search device, to implement precise searching for the lost device, and increase a probability of finding the lost device by a user.

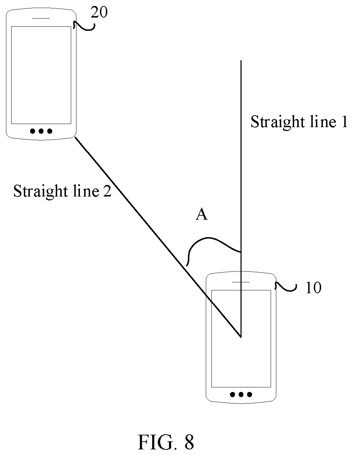

Optionally, in this embodiment of this application, the direction of the first electronic device relative to the second electronic device may be represented by an angle between the first electronic device and the second electronic device. In some examples, the angle may be an included angle between an orientation of the second electronic device and a direction of a connection line between the first electronic device and the second electronic device. Optionally, the orientation of the second electronic device may be an orientation of the second electronic device in a horizontal direction. For example, FIG. 8 is a diagram of an angle between a first electronic device and a second electronic device according to an embodiment of this application. For example, the first electronic device is still the mobile phone 20, and the second electronic device is still the mobile phone 10. As shown in FIG. 8, an orientation of the mobile phone 10 is a direction of a straight line 1, and an orientation of the mobile phone 20 is a direction of a straight line 2. In this case, an included angle between the mobile phone 10 and the mobile phone 20 may be an angle A.

It can be understood that the angle between the first electronic device and the second electronic device may alternatively have another definition, provided that the angle can represent the direction of the first electronic device relative to the second electronic device.

In another possible implementation, at least one of the direction, the distance, and the like of the first electronic device relative to the second electronic device may alternatively be determined based on ultrasonic data. In this implementation, after the first electronic device establishes the connection to the second electronic device, the second electronic device may send a ranging and angle measurement instruction to the first electronic device. The ranging and angle measurement instruction may instruct the first electronic device to send ultrasonic data. In this implementation, when the first electronic device is in the power-off state, a speaker module is still in an operating state, to be specific, the first electronic device still keeps supplying power to the speaker module. Specifically, based on the architecture shown in FIG. 4, after the Bluetooth module of the second electronic device establishes a connection to the Bluetooth module of the first electronic device, the device-side network search service of the second electronic device generates a ranging and angle measurement instruction, and delivers the instruction to the Bluetooth module of the second electronic device. Then the Bluetooth module of the second electronic device sends the ranging and angle measurement instruction to the Bluetooth module of the first electronic device based on the established Bluetooth connection. Correspondingly, after receiving the ranging and angle measurement instruction, the Bluetooth module of the first electronic device performs, according to the instruction, (12) shown in FIG. 4: Drive the speaker module of the first electronic device to send ultrasonic data. In addition, a microphone module of the second electronic device starts to obtain ultrasonic data of the first electronic device. At least one of the direction, the distance, and the like of the first electronic device relative to the second electronic device is measured based on the ultrasonic data. For an implementation of ultrasonic ranging and angle measurement, refer to an implementation in the related technology.

In some embodiments, an electronic device other than the first electronic device may alternatively send ultrasonic data near the second electronic device. Therefore, to ensure that ultrasonic data obtained by the second electronic device is from the first electronic device, in some implementations, the ultrasonic data may carry information representing an identity of the first electronic device, for example, an identifier of the first electronic device; or the ultrasonic data may be an ultrasonic wave on a specific frequency band, and the second electronic device may obtain ultrasonic data on the specific frequency band.

In addition, a basic principle of ultrasonic positioning is to calculate a distance based on a propagation speed of an ultrasonic wave in the air or a medium. Therefore, usually, an ultrasonic transmitter transmits an ultrasonic signal to a target object, and when the ultrasonic signal encounters the object and is reflected back, an ultrasonic receiver captures a reflected signal. A distance between the ultrasonic transmitter and the object may be calculated by measuring a time difference between the transmitted signal and the received signal. Therefore, in some embodiments, the second electronic device may cyclically obtain, for a plurality of times, ultrasonic data sent by the first electronic device, so that a determined direction, a determined distance, and the like of the first electronic device relative to the electronic device can be more accurate. In addition, because the first electronic device or the second electronic device may continuously move, the second electronic device cyclically obtains, for a plurality of times, ultrasonic data sent by the first electronic device, so that a determined direction, a determined direction distance, and the like of the first electronic device relative to the electronic device can be updated in a timely manner.

In this way, because the ultrasonic wave can support high-precision ranging and angle measurement, a direction, a distance, and the like of a lost device is measured based on ultrasonic data. This can not only implement searching for the lost device when the lost device is in a power-off state or a low-battery-level state, but also implement high-precision measurement of a distance, a direction, and the like, to implement precise searching for the lost device, and increase a probability of finding the lost device by a user.

Optionally, the foregoing two implementations may be used separately or in combination. When the foregoing two implementations are used in combination, the second electronic device may comprehensively determine a final direction and a final distance based on a distance and a direction that are measured based on the sparklink module, a distance and a direction that are measured based on the ultrasonic data, and the like. It can be understood that the direction and the distance are a direction and a distance of the first electronic device relative to the second electronic device. In this way, because sparklink can measure a long effective distance but has lower ranging and angle measurement precision than the ultrasonic wave and the ultrasonic wave can measure a shorter effective distance than sparklink, sparklink and the ultrasonic wave are combined. This can not only implement measurement of a distance, a direction, and the like when a lost device is far away from a search device, but also improve measurement precision, to implement precise searching for the lost device, and increase a probability of finding the lost device by a user.

In a possible manner of determining, the final direction and the final distance may be determined based on at least one of the following: a scenario in which the first electronic device is located, and a distance between the first electronic device and the second electronic device. Specifically, when the first electronic device is in a bag scenario, the direction and the distance that are measured based on the sparklink module may be determined as the final direction and the final distance; or when the first electronic device is in a non-bag scenario, the final direction and the final distance may be determined based on a distance between the first electronic device and the second electronic device. Optionally, the distance between the first electronic device and the second electronic device may be the distance measured based on the sparklink module, or may be the distance measured based on the ultrasonic data.

In a possible implementation, when the distance between the first electronic device and the second electronic device is greater than or equal to a preset distance, the direction and the distance that are measured based on the sparklink module may be determined as the final direction and the final distance. On the contrary, when the distance between the first electronic device and the second electronic device is less than a preset distance, the direction and the distance that are measured based on the ultrasonic data or the like may be determined as the final direction and the final distance.

It can be understood that, in this embodiment of this application, the bag scenario may be a scenario in which the first electronic device is placed in a bag (for example, a backpack or a luggage case). For example, the second electronic device may determine, based on signal strength of Bluetooth broadcast, signal strength of sparklink broadcast, or the like, whether the first electronic device is in the bag scenario. A manner of determining whether the first electronic device is in the bag scenario is not limited in this embodiment of this application.

The preset distance may be related to performance of sparklink-based ranging and angle measurement and performance of Bluetooth-based ranging and angle measurement. For example,

Table 1 shows some example performance parameters related to ranging and angle measurement according to an embodiment of this application.

**Table 1**

| Performance parameter | Sparklink | Ultrasonic wave | Ultra-wideband (ultra-wideband, UWB) |
|---|---|---|---|
| Ranging error | 1 meter to 3 meters | 0.1 m | 0.1 m |
| Directivity | Supported | 3° to 5° | 3° to 5° |
| Effective distance | Greater than 50 meters | Less than 15 meters | Less than 15 meters |
| Costs | A | A | Greater than A |

As shown in Table 1, the ultrasonic wave is superior to sparklink in terms of the ranging error and the directivity (to be specific, direction measurement precision), sparklink is superior to the ultrasonic wave and UWB in terms of the effective distance (to be specific, a maximum distance that can be measured), and the ultrasonic wave and sparklink have lower costs than UWB. Therefore, based on the performance parameters shown in Table 1, in some examples, the preset distance may be 3 meters. Certainly, the preset distance may alternatively be set by a developer according to an actual requirement.

Certainly, in another manner of determining, different weights may alternatively be specified for the direction and the distance that are measured based on the sparklink module, the direction and the distance that are measured based on ultrasonic data, and the like, and the final direction, the distance, and the like may be calculated based on the specified weights.

Optionally, in this embodiment of this application, the ranging and angle measurement instruction may be automatically triggered by the second electronic device, or may be actively triggered by the user. For example, the ranging and angle measurement instruction is actively triggered by the user, and the second electronic device is still the mobile phone 10. The interface shown in FIG. 7(1) may further include a Sparklink search button 701. The user may perform a tap operation or the like on the Sparklink search button 701 to trigger the ranging and angle measurement instruction.

Optionally, in this embodiment of this application, the ranging and angle measurement instruction may be encrypted, to ensure that an electronic device receiving the ranging and angle measurement instruction is the first electronic device, and enable the first electronic device to verify an identity of the second electronic device, to ensure communication security. For example, after generating the ranging and angle measurement instruction, the device-side search network service of the second electronic device may further perform (10) shown in FIG. 4: Send the ranging and angle measurement instruction to the key management module for encryption. Optionally, the key management module may correspondingly perform encryption by using an identity authentication key. In some embodiments, the identity authentication key may be a same key held by both the first electronic device and the second electronic device, and the identity authentication key may be fixed.

In some other embodiments, the identity authentication key may be a variable key. To be specific, the second electronic device use different identity authentication keys on different occasions. In this embodiment, in a possible implementation, an update periodicity of the identity authentication key may be the same as an update periodicity of the derived public key P of the offline broadcast key. To be specific, the update periodicity of the identity authentication key may be consistent with a Bluetooth broadcast periodicity of the first electronic device. For example, the first electronic device performs Bluetooth broadcast once every 15 minutes. If Bluetooth broadcast is performed for two days, a total of 96 identity authentication keys are needed.

Optionally, the identity authentication key may be generated by the first electronic device. For example, the first electronic device may further generate the identity authentication key on an occasion on which the first electronic device generates the derived key of the offline broadcast key. Then the first electronic device may upload the identity authentication key to the server. Correspondingly, the second electronic device may obtain the identity authentication key from the server. It can be understood that, when the identity authentication key is a variable key, the first electronic device may simultaneously upload all generated identity authentication keys to the server. Alternatively, when sending the Bluetooth broadcast, the first electronic device may further include the identity authentication key in the Bluetooth broadcast. In this way, after obtaining the Bluetooth broadcast of the first electronic device through scanning and successfully decrypting the Bluetooth broadcast by using the offline broadcast key, the second electronic device can obtain the identity authentication key in the Bluetooth broadcast. It can be understood that a manner of obtaining the identity authentication key by the second electronic device is not limited in this embodiment of this application.

Optionally, the identity authentication key and the offline broadcast key in this embodiment of this application may be the same or different.

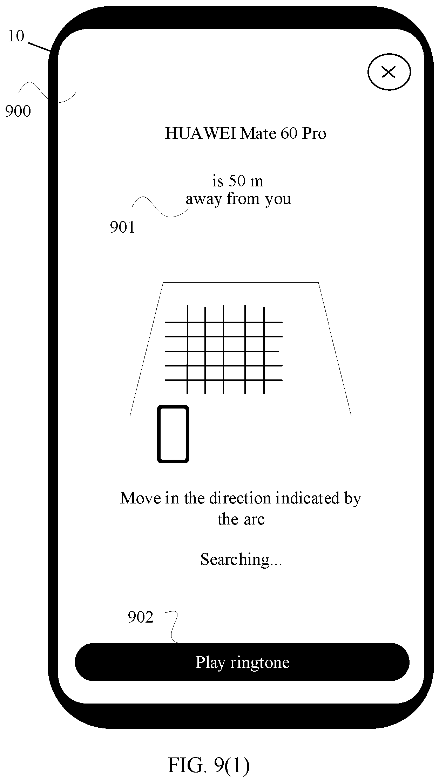

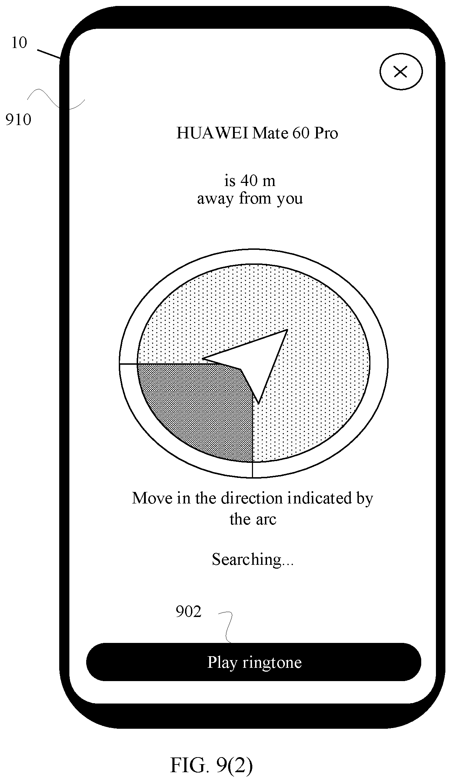

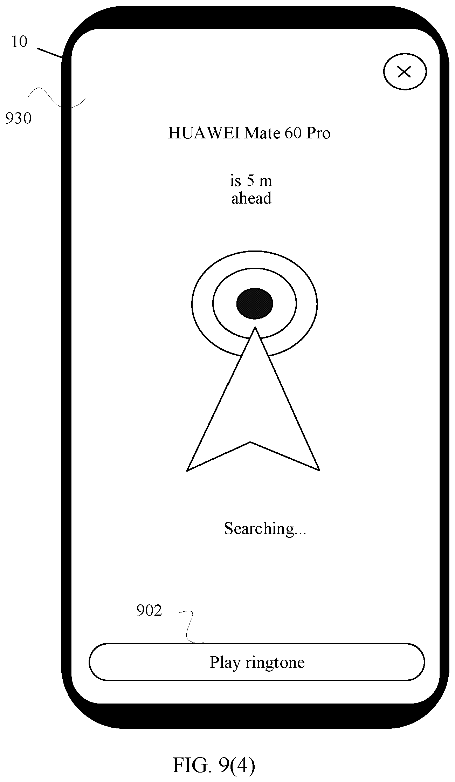

In some embodiments, in a process of determining the direction and the distance of the first electronic device and after obtaining the direction and the distance of the first electronic device, the second electronic device may output a corresponding interface to the user, so that the user learns of a progress, details, and the like of precise searching. For example, before the second electronic device obtains the direction of the first electronic device, for example, in a process in which the sparklink module enables the AR engine to obtain the direction of the first electronic device, where the second electronic device is still the mobile phone 10, the mobile phone 10 may display an interface 900 shown in FIG. 9(1). The interface 900 may first output an obtained distance (for example, 50 meters) of the first electronic device, and may further output a reminder message 901. The user may perform an operation based on an indication of the reminder message 901, so that the second electronic device can obtain the direction of the first electronic device. Subsequently, after the mobile phone 10 obtains the direction of the first electronic device, the mobile phone 10 may display an interface 910 shown in FIG. 9(2) to an interface 930 shown in FIG. 9(4), to output the direction of the first electronic device. A direction indicated by an arrow included in the interface 910 shown in FIG. 9(2) to the interface 930 shown in FIG. 9(4) may represent a direction of the first electronic device relative to the second electronic device, and a radian range indicated by the arrow may represent a confidence, namely, accuracy, of the direction. When the user continuously moves based on the radian range indicated by the arrow, as displayed on the interface 910 shown in FIG. 9(2) to the interface 930 shown in FIG. 9(4), a distance between the first electronic device and the second electronic device becomes increasingly short (for example, changes from 40 meters to 5 meters), and the radian range indicated by the arrow gradually converges. In this case, the direction of the first electronic device relative to the second electronic device becomes increasingly accurate. If the radian range converges to a form of a dot shown in FIG. 9(4), the first electronic device can be accurately located. Optionally, when the radian indicated by the arrow converges to the form of the dot shown in FIG. 9(4), the mobile phone 10 may further change a background color or the like.

Optionally, the interfaces shown in FIG. 9(1) to FIG. 9(4) may further include a Play ringtone button 902. A Play ringtone button 902 shown in FIG. 9(4) may be displayed in an operable state, and a Play ringtone button 902 shown in FIG. 9(1) to FIG. 9(3) may be displayed in an inoperable state. On an occasion on which the second electronic device outputs the interfaces shown in FIG. 9(1) to FIG. 9(3), the first electronic device is far away from the second electronic device. In this case, even if the first electronic device is controlled, by using the Play ringtone button 902, to ring, the user may be unable to hear the ringtone. This is unhelpful for the user to find the first electronic device. However, on an occasion on which the second electronic device outputs the interfaces shown in FIG. 9(1) to FIG. 9(3), the first electronic device is close to the second electronic device. In this case, if the first electronic device is controlled, by using the Play ringtone button 902, to ring, a probability that the user hears the ringtone is high. This helps the user find the first electronic device.

In some embodiments, the instruction for implementing precise searching may alternatively include a ring instruction, and the ring instruction may be used to control the first electronic device to ring. Similarly, the ring instruction may be automatically triggered by the second electronic device, or may be actively triggered by the user. For example, the ring instruction is automatically triggered by the second electronic device. For example, when the second electronic device determines that a distance between the second electronic device and the first electronic device is less than a specified distance, the second electronic device may automatically trigger the ring instruction. For example, when the second electronic device displays the interface shown in FIG. 9(4), the second electronic device may further automatically trigger the ring instruction.

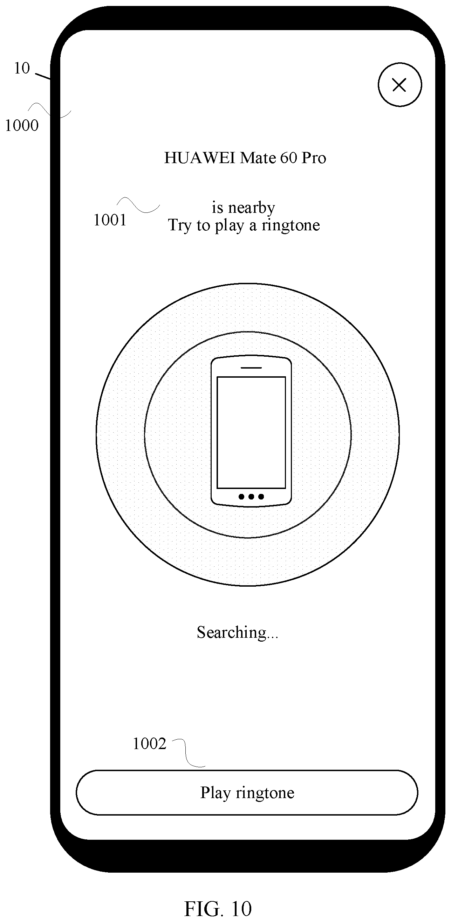

For example, the ring instruction is actively triggered by the user, and the second electronic device is still the mobile phone 10. The interface shown in FIG. 7(1) may further include a Play ringtone button 702. The user may perform a tap operation or the like on the Play ringtone button 702. In response to the operation of the user, the second electronic device may send the ring instruction to the first electronic device. Alternatively, the user may perform a tap operation or the like on the Play ringtone button 902 included in the interface shown in FIG. 9(4). In response to the operation of the user, the second electronic device may also send the ring instruction. Alternatively, when the second electronic device determines that a distance between the second electronic device and the first electronic device is less than a specified distance, the second electronic device may display an interface for triggering the ring instruction, and the user may trigger the ring instruction by using the interface. For example, the second electronic device is still the mobile phone 10. After the mobile phone 10 displays the interface shown in FIG. 9(4), the mobile phone 10 may further jump to an interface 1000 shown in FIG. 10. The interface 1000 may include a reminder message 1001 and a Play ringtone button 1002. The reminder message 1001 may be used to notify the user that the first electronic device is already nearby and the user may attempt to play a ringtone to search for the first electronic device. Then the user may perform a tap operation or the like on the Play ringtone button 1002 based on the reminder message 1001. In response to the operation, the mobile phone 10 may send the ring instruction to the first electronic device.

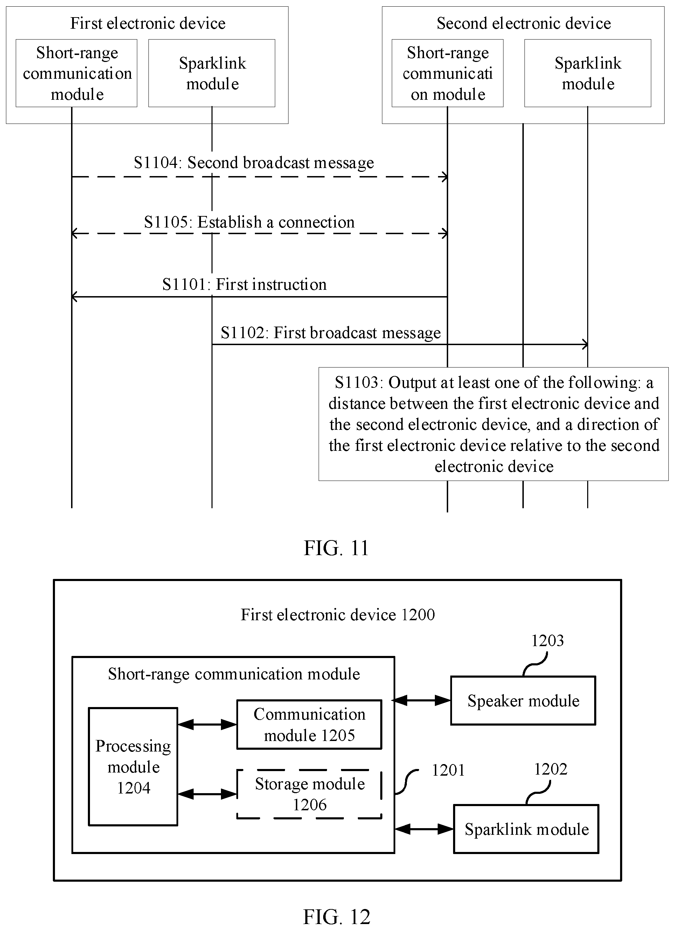

For example, FIG. 11 is a schematic flowchart of a device search method according to an embodiment of this application. As shown in FIG. 11, the method includes the following steps.

S1101: A short-range communication module of a second electronic device sends a first instruction to a first electronic device. Correspondingly, a short-range communication module of the first electronic device receives the first instruction from the second electronic device.

Both the first electronic device and the second electronic device include a short-range communication module and a sparklink module. Both the short-range communication module and the sparklink module of the first electronic device are in an operating state when the first electronic device is in a power-off state or a power saving mode (which may also be referred to as a low-battery-level state, a low-battery-level mode, or the like). For example, the short-range communication module may be a Bluetooth module or the sparklink module. Optionally, when the short-range communication module is the sparklink module, the short-range communication module and the sparklink module in the first electronic device and the second electronic device shown in FIG. 11 are a same module. It can be understood that, currently, when the first electronic device is in the power saving mode, the first electronic device usually disables a network function, a Bluetooth function, and the like. However, in this embodiment of this application, when the first electronic device is in the power saving mode, the Bluetooth function is not disabled, and normal operating of Bluetooth is maintained. It can be further understood that, being in the operating state may mean that the module may be in a normal running state.

When step S1101 is performed, the first electronic device is in the power-off state or the power saving mode, and the first electronic device has established a connection to the second electronic device through the short-range communication module.

For example, the first instruction may be the foregoing ranging and angle measurement instruction. In some embodiments, the first instruction may be encrypted by using the first key. Correspondingly, the short-range communication module of the first electronic device may decrypt the first instruction by using a second key. Optionally, the first key may be the same as or different from the second key. The first key and the second key are the foregoing identity authentication key. In some embodiments, the second electronic device may display a first interface (for example, an interface shown in FIG. 7(1)), where the first interface includes a first control (for example, a Sparklink search button 701 shown in FIG. 7(1)) and location information of the first electronic device. In response to an operation for the first control, the second electronic device sends the first instruction to the first electronic device through the short-range communication module. For descriptions of triggering the first instruction by the second electronic device, refer to the foregoing related descriptions of triggering the ranging and angle measurement instruction.

S1102: In response to the first instruction, the short-range communication module of the first electronic device enables the sparklink module to send a first broadcast message. Correspondingly, the sparklink module of the second electronic device receives the first broadcast message.

In some embodiments, the first electronic device may further include a speaker module, and the second electronic device may further include a microphone module. In response to the first instruction, the first electronic device may further enable the speaker module to send ultrasonic data, and correspondingly, the second electronic device may further enable the microphone module to receive the ultrasonic data. Optionally, in this embodiment, the first instruction may be implemented as one or more messages.

In some other embodiments, when the short-range communication module of the first electronic device is a Bluetooth module, the first electronic device may enable, in response to the first instruction, the Bluetooth module to send the first broadcast message.

S1103: In response to the first broadcast message, the second electronic device outputs at least one of the following: a distance between the first electronic device and the second electronic device, and a direction of the first electronic device relative to the second electronic device.

In some embodiments, when the second electronic device further receives the ultrasonic data from the first electronic device, the second electronic device may further output, in response to the first broadcast message (for example, the foregoing sparklink broadcast) and the ultrasonic data, at least one of the following: the distance between the first electronic device and the second electronic device, and the direction of the first electronic device relative to the second electronic device.

In this embodiment, in a possible implementation, the second electronic device determines, based on the first broadcast message, a first distance between the first electronic device and the second electronic device, and that the first electronic device is located in a first direction of the second electronic device. Optionally, the second electronic device may determine, based on the first broadcast message and an AR engine, the first distance between the first electronic device and the second electronic device, and that the first electronic device is located in the first direction of the second electronic device. The second electronic device determines, based on the ultrasonic data, a second distance between the first electronic device and the second electronic device, and that the second electronic device is located in a second direction of the second electronic device. The second electronic device outputs, based on the first distance, the first direction, the second distance, and the second direction, at least one of the following: the distance between the first electronic device and the second electronic device, and the direction of the first electronic device relative to the second electronic device. For the specific implementation, refer to the foregoing related implementations of determining the distance and the direction based on the ultrasonic data and the sparklink broadcast.

In some embodiments, when the first electronic device is in a bag scenario, the output distance between the first electronic device and the second electronic device is the first distance, and the output direction of the first electronic device relative to the second electronic device is the first direction. In some embodiments, when the first electronic device is in a non-bag scenario, if a distance between the first electronic device and the second electronic device is greater than or equal to a first preset distance, the output distance between the first electronic device and the second electronic device is the first distance, and the output direction of the first electronic device relative to the second electronic device is the first direction. Alternatively, when the first electronic device is in a non-bag scenario, if a distance between the first electronic device and the second electronic device is less than a first preset distance, the output distance between the first electronic device and the second electronic device is the second distance, and the output direction of the first electronic device relative to the second electronic device is the second direction.

Optionally, the second electronic device may output, by using an interface shown in FIG. 9(1) to FIG. 9(4) or the like, the distance between the first electronic device and the second electronic device, and the direction of the first electronic device relative to the second electronic device.

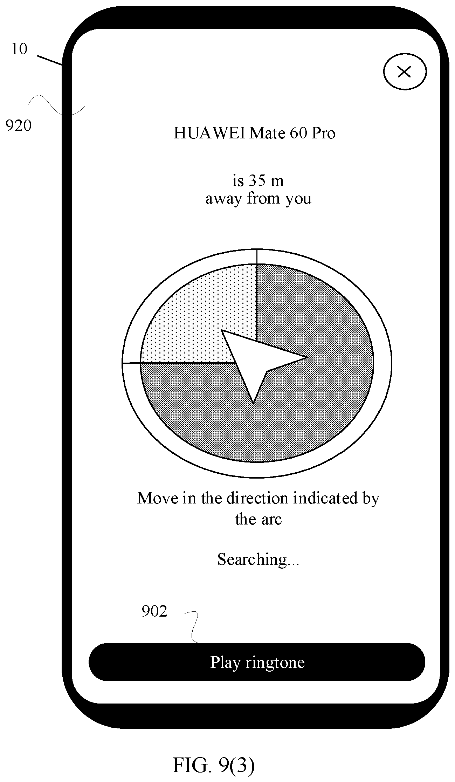

In some embodiments, in response to a first broadcast message at a first moment, the second electronic device displays one or more of a first distance, a first direction, and first information, where the first distance is a distance between the first electronic device and the second electronic device at the first moment, the first direction is a direction of the first electronic device relative to the second electronic device at the first moment, and the first information represents a confidence of the first direction. In response to a first broadcast message at a second moment, the second electronic device displays one or more of a second distance, a second direction, and second information, where the second distance is a distance between the first electronic device and the second electronic device at the second moment, the second direction indicates a direction of the first electronic device relative to the second electronic device at the second moment, and the second information represents a confidence of the second direction. Optionally, the first moment and the second moment may be different moments. For example, the first distance may be 40 m shown in FIG. 9(2), the first direction may be a direction indicated by an arrow shown in FIG. 9(2), the second distance may be 35 m shown in FIG. 9(3), and the second direction may be a direction indicated by an arrow shown in FIG. 9(3). Optionally, the first information and the second information may be displayed as a radian range indicated by an arrow in FIG. 9(1) to FIG. 9(4), or may be displayed as information in another form.

In some examples, the first distance is greater than the second distance, and the confidence of the first direction is lower than the confidence of the second direction. For example, when the confidence is represented by the radian range indicated by the arrow shown in FIG. 9(1) to FIG. 9(4), a larger radian range indicates a lower confidence. 40 m shown in FIG. 9(2) is greater than 35 m shown in FIG. 9(3), and a radian range indicated by the arrow shown in FIG. 9(2) is larger than a radian range indicated by the arrow shown in FIG. 9(3).

In some embodiments, the short-range communication module of the second electronic device may further send a second instruction (for example, the foregoing ring instruction) to the short-range communication module of the first electronic device. Correspondingly, the short-range communication module of the first electronic device may receive the second instruction. In response to the second instruction, the short-range communication module of the second electronic device may enable the speaker module to ring. Optionally, the second electronic device may send the second instruction when a distance between the first electronic device and the second electronic device is less than a second preset distance, or may send the second instruction in response to a user operation or the like.

Optionally, in some embodiments, before step S1101 shown in FIG. 11 is performed, the method shown in FIG. 11 further includes step S1104 and step S1105.

S1104: The short-range communication module of the first electronic device sends a second broadcast message. Correspondingly, the short-range communication module of the second electronic device receives the second broadcast message.

When step S1104 is performed, the first electronic device is in the power-off state or the power saving mode.

In some embodiments, the second broadcast message (for example, the foregoing Bluetooth broadcast) may carry a third key, and the third key may be used for the second electronic device to verify an identity of the first electronic device. For example, the third key may be the foregoing offline broadcast key.

Optionally, before the first electronic device enters the power-off state or the power saving mode, the first electronic device may further generate at least one of the second key and the third key, and send the at least one of the second key and the third key to the short-range communication module. For the specific implementation, refer to the foregoing related implementations.

In some embodiments, when receiving the first instruction in different broadcast periodicities, the short-range communication module of the first electronic device decrypts the first instruction by using different second keys. Alternatively, when the short-range communication module sends the second broadcast message in different broadcast periodicities, the second broadcast message carries different third keys. The broadcast periodicity is a periodicity in which the short-range communication module sends the second broadcast message, for example, the foregoing Bluetooth broadcast periodicity.

S1105: In response to the second broadcast message, the short-range communication module of the first electronic device establishes a connection to the short-range communication module of the second electronic device.

For example, the connection may be the foregoing GATT connection.

The foregoing mainly describes the solutions provided in embodiments of this application from the perspective of the method. It can be understood that, to implement the foregoing functions, an electronic device includes corresponding hardware structures and/or software modules for performing the functions. Units and algorithm steps in the examples described with reference to embodiments disclosed in this application can be implemented by hardware or a combination of hardware and computer software in embodiments of this application. Whether a function is performed by hardware or hardware driven by a computer depends on particular applications and design constraints of the technical solutions. A person skilled in the art may use different methods to implement the described functions for each particular application. However, it should not be considered that the implementation goes beyond the scope of the technical solutions in embodiments of this application.

In embodiments of this application, the electronic device may be divided into functional modules based on the foregoing method examples. For example, each functional module may be obtained through division for a corresponding function, or two or more functions may be integrated into one processing unit. The integrated unit may be implemented in a form of hardware, or may be implemented in a form of a software functional module. It should be noted that, in embodiments of this application, division into the units is an example, and is merely logical function division. During actual implementation, another division manner may be used.

FIG. 12 is a diagram of a structure of a first electronic device according to an embodiment of this application. The first electronic device 1200 may be configured to implement the methods recorded in the foregoing method embodiments. For example, the first electronic device 1200 may specifically include a short-range communication module 1201, a sparklink module 1202, and a speaker module 1203.

A processing module 1204 and a communication module 1205 are disposed in the short-range communication module 1201. Optionally, a storage module 1206 may be further disposed. The processing module 1204 is configured to support the first electronic device 1200 in performing the processing function according to any one of FIG. 1(1) and FIG. 1(2) to FIG. 11. The communication module 1202 is configured to support the first electronic device 1200 in performing the communication function according to any one of FIG. 1(1) and FIG. 1(2) to FIG. 11. The storage module 1206 stores a program or instructions. When the processing module 1204 executes the program or the instructions, the first electronic device 1200 shown in FIG. 12 is enabled to perform the methods shown in the foregoing method embodiments.

The sparklink module 1202 is configured to support the first electronic device 1200 in performing sparklink broadcast.

The speaker module 1203 is configured to support the first electronic device 1200 in ringing, sending ultrasonic data, and the like.

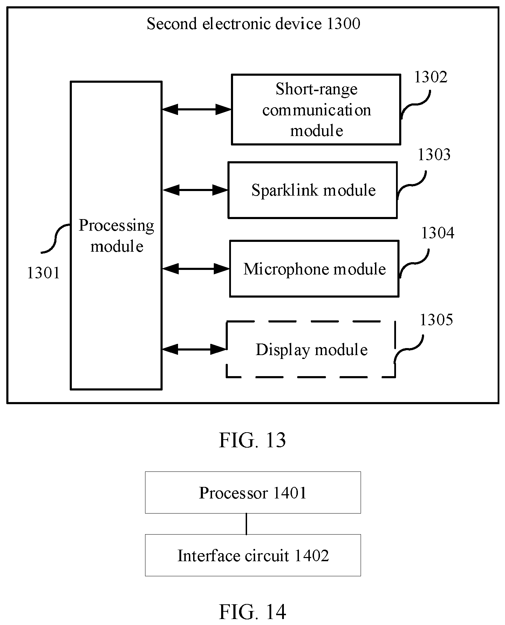

FIG. 13 is a diagram of a structure of a second electronic device according to an embodiment of this application. The second electronic device 1300 may be configured to implement the methods recorded in the foregoing method embodiments. For example, the second electronic device 1300 may specifically include a processing module 1301, a short-range communication module 1302, a sparklink module 1303, and a microphone 1304.

The processing module 1301 is configured to support the second electronic device 1300 in performing the processing function according to any one of FIG. 1(1) and FIG. 1(2) to FIG. 11.

The short-range communication module 1302 is configured to support the second electronic device 1300 in performing the communication function according to any one of FIG. 1(1) and FIG. 1(2) to FIG. 11.

The sparklink module 1303 is configured to support the second electronic device 1300 in scanning for sparklink broadcast.

The microphone module 1304 is configured to support the second electronic device in collecting ultrasonic data and the like.

Optionally, the second electronic device 1300 shown in FIG. 13 may further include a display module 1305. The display module 1305 may be configured to output, for the second electronic device 1300, at least one of the following: a distance between a first electronic device and the second electronic device, and a direction of the first electronic device relative to the second electronic device.

Optionally, the second electronic device 1300 shown in FIG. 13 may further include a storage module (not shown in FIG. 13), and the storage module stores a program or instructions. When the processing module 1301 executes the program or the instructions, the second electronic device 1300 shown in FIG. 13 is enabled to perform the methods shown in the foregoing method embodiments.

For technical effects of the electronic devices shown in FIG. 12 and FIG. 13, refer to the technical effects of the methods shown in the foregoing method embodiments. Details are not described herein again. The processing module shown in FIG. 12 and FIG. 13 may be implemented by using a processor or a processor-related circuit component, and may be a processor or a processing module. The communication module may be implemented by using a transceiver or a transceiver-related circuit component, and may be a transceiver or a transceiver module. The display module may be implemented by using a display-related component.

An embodiment of this application further provides a chip system. As shown in FIG. 14, the chip system includes at least one processor 1401 and at least one interface circuit 1402. The processor 1401 and the interface circuit 1402 may be interconnected through a line. For example, the interface circuit 1402 may be configured to receive a signal from another apparatus. For another example, the interface circuit 1402 may be configured to send a signal to another apparatus (for example, the processor 1401). For example, the interface circuit 1402 may read instructions stored in a memory, and send the instructions to the processor 1401. When the instructions are executed by the processor 1401, an electronic device is enabled to perform the steps performed by the electronic device in the foregoing embodiments. Certainly, the chip system may further include another discrete component. This is not specifically limited in this embodiment of this application. Optionally, the chip system may include one or more processors. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory.

Optionally, the chip system may also include one or more memories. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

It should be understood that the steps in the foregoing method embodiments may be performed by an integrated logic circuit of hardware in the processor or by using instructions in a form of software. The steps of the methods disclosed with reference to embodiments of this application may be directly performed by a hardware processor, or may be performed by hardware in a processor in combination with a software module.

An embodiment of this application further provides a computer storage medium. The computer storage medium stores computer instructions. When the computer instructions are run on an electronic device, the electronic device is enabled to perform the methods in the foregoing method embodiments.

An embodiment of this application provides a computer program product. The computer program product includes a computer program or instructions. When the computer program or the instructions are run on a computer, the computer is enabled to perform the methods in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the methods in the foregoing method embodiments.

The electronic device, the computer storage medium, the computer program product, or the chip provided in embodiments is configured to perform the corresponding method provided above. Therefore, for beneficial effects that can be achieved, refer to the beneficial effects in the corresponding method provided above. Details are not described herein again.

Based on the descriptions of the foregoing implementations, a person skilled in the art may understand that, for ease and brevity of description, division into the foregoing functional modules is merely used as an example for illustration. During actual application, the foregoing functions may be allocated to different functional modules and implemented according to a requirement. In other words, an internal structure of the apparatus is divided into different functional modules to implement all or some of the functions described above.

In the several embodiments provided in this application, it should be understood that the disclosed apparatuses and methods may be implemented in other manners. Embodiments may be combined with or referenced by each other without a conflict. The described apparatus embodiments are merely examples. For example, division into the modules or the units is merely logical function division. During actual implementation, another division manner may be used. For example, a plurality of units or components may be combined or integrated into another apparatus, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The units described as separate components may or may not be physically separated, and components shown as units may be one or more physical units, to be specific, may be located in one place, or may be distributed in a plurality of different places. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device search method, applied to a first electronic device, wherein the first electronic device comprises a short-range communication module and a sparklink module, the short-range communication module and the sparklink module are in an operating state when the first electronic device is in a power-off state or a power saving mode, and the method comprises:
when the first electronic device is in the power-off state or the power saving mode and the first electronic device is connected to a second electronic device through the short-range communication module, receiving, by the short-range communication module, a first instruction from the second electronic device; and
enabling, by the short-range communication module in response to the first instruction, the sparklink module to send a first broadcast message, wherein the first broadcast message is used to determine at least one of the following: a distance between the first electronic device and the second electronic device, and a direction of the first electronic device relative to the second electronic device.

2. The method according to claim 1, wherein the first electronic device further comprises a speaker module, the speaker module is in an operating state when the first electronic device is in the power-off state or the power saving mode, and enabling, by the short-range communication module in response to the first instruction, the sparklink module to send the first broadcast message comprises:
in response to the first instruction, enabling, by the short-range communication module, the sparklink module to send the first broadcast message, and enabling the speaker module to send ultrasonic data, wherein the ultrasonic data is used to determine at least one of the following: the distance between the first electronic device and the second electronic device, and the direction of the first electronic device relative to the second electronic device.

3. The method according to claim 1 or 2, wherein the first electronic device further comprises a speaker module, the speaker module is in an operating state when the first electronic device is in the power-off state or the power saving mode, and the method further comprises:
receiving, by the short-range communication module, a second instruction from the second electronic device; and
enabling, by the short-range communication module in response to the second instruction, the speaker module to ring.

4. The method according to any one of claims 1 to 3, wherein the first instruction is encrypted by using a first key, and before enabling, by the short-range communication module in response to the first instruction, the sparklink module to send the first broadcast message, the method further comprises:
decrypting, by the short-range communication module, the first instruction by using a second key.

5. The method according to any one of claims 1 to 4, wherein before receiving, by the short-range communication module, the first instruction from the second electronic device, the method further comprises:
when the first electronic device is in the power-off state or the power saving mode, sending, by the short-range communication module, a second broadcast message, wherein the second broadcast message is used to establish a connection to the second electronic device.

6. The method according to claim 5, wherein the second broadcast message carries a third key, and the third key is used for the second electronic device to verify an identity of the first electronic device.

7. The method according to claim 6, wherein when the first electronic device is in the power-off state or the power saving mode, before sending, by the short-range communication module, the second broadcast message, the method further comprises:
before the first electronic device is in the power-off state or the power saving mode, generating, by the first electronic device, at least one of the second key and the third key; and
sending, by the first electronic device, at least one of the second key and the third key to the short-range communication module.

8. The method according to claim 6 or 7, wherein
when receiving the first instruction in different broadcast periodicities, the short-range communication module decrypts the first instruction by using different second keys; or
when the short-range communication module sends the second broadcast message in different broadcast periodicities, the second broadcast message carries different third keys, wherein
the broadcast periodicity is a periodicity in which the short-range communication module sends the second broadcast message.

9. The method according to any one of claims 1 to 8, wherein the short-range communication module is a Bluetooth module or a sparklink module.

10. A device search method, applied to a second electronic device, wherein the second electronic device comprises a short-range communication module and a sparklink module, the short-range communication module is connected to a first electronic device in a power-off state or a power saving mode, and the method comprises:
sending, by the second electronic device, a first instruction to the first electronic device through the short-range communication module;
receiving, by the second electronic device in response to the first instruction, a first broadcast message from the first electronic device through the sparklink module; and
outputting, by the second electronic device in response to the first broadcast message, at least one of the following: a distance between the first electronic device and the second electronic device, and a direction of the first electronic device relative to the second electronic device.

11. The method according to claim 10, wherein the second electronic device further comprises a microphone module, and receiving, by the second electronic device in response to the first instruction, the first broadcast message from the first electronic device through the sparklink module comprises:
in response to the first instruction, receiving, by the second electronic device, the first broadcast message through the sparklink module, and receiving ultrasonic data from the first electronic device through the microphone module.

12. The method according to claim 11, wherein outputting, by the second electronic device in response to the first broadcast message, at least one of the following: the distance between the first electronic device and the second electronic device, and the direction of the first electronic device relative to the second electronic device comprises:
outputting, by the second electronic device in response to the first broadcast message and the ultrasonic data, at least one of the following: the distance between the first electronic device and the second electronic device, and the direction of the first electronic device relative to the second electronic device.

13. The method according to claim 12, wherein before outputting, by the second electronic device in response to the first broadcast message and the ultrasonic data, at least one of the following: the distance between the first electronic device and the second electronic device, and the direction of the first electronic device relative to the second electronic device, the method further comprises:
determining, by the second electronic device based on the first broadcast message, a first distance between the first electronic device and the second electronic device, and that the first electronic device is located in a first direction of the second electronic device;
determining, by the second electronic device based on the ultrasonic data, a second distance between the first electronic device and the second electronic device, and that the second electronic device is located in a second direction of the second electronic device; and
outputting, by the second electronic device based on the first distance, the first direction, the second distance, and the second direction, at least one of the following: the distance between the first electronic device and the second electronic device, and the direction of the first electronic device relative to the second electronic device.

14. The method according to claim 13, wherein when the first electronic device is in a bag scenario, the output distance between the first electronic device and the second electronic device is the first distance, and the output direction of the first electronic device relative to the second electronic device is the first direction.

15. The method according to claim 13 or 14, wherein when the first electronic device is in a non-bag scenario, if a distance between the first electronic device and the second electronic device is greater than or equal to a first preset distance, the output distance between the first electronic device and the second electronic device is the first distance, and the output direction of the first electronic device relative to the second electronic device is the first direction; or
when the first electronic device is in a non-bag scenario, if a distance between the first electronic device and the second electronic device is less than a first preset distance, the output distance between the first electronic device and the second electronic device is the second distance, and the output direction of the first electronic device relative to the second electronic device is the second direction.

16. The method according to any one of claims 13 to 15, wherein the second electronic device further comprises an AR engine, and determining, by the second electronic device based on the first broadcast message, the first distance between the first electronic device and the second electronic device, and that the first electronic device is located in the first direction of the second electronic device comprises:
determining, by the second electronic device based on the first broadcast message and the AR engine, the first distance between the first electronic device and the second electronic device, and that the first electronic device is located in the first direction of the second electronic device.

17. The method according to any one of claims 10 to 16, wherein the method further comprises:
when a distance between the first electronic device and the second electronic device is less than a second preset distance, sending, by the second electronic device, a second instruction to the first electronic device through the short-range communication module, wherein the second instruction instructs the first electronic device to ring.

18. The method according to any one of claims 10 to 17, wherein sending, by the second electronic device, the first instruction to the first electronic device through the short-range communication module comprises:
displaying, by the second electronic device, a first interface, wherein the first interface comprises a first control and location information of the first electronic device; and
in response to an operation on the first control, sending, by the second electronic device, the first instruction to the first electronic device through the short-range communication module.

19. The method according to any one of claims 10 to 18, wherein before sending, by the second electronic device, the first instruction to the first electronic device through the short-range communication module, the method further comprises:
receiving, by the second electronic device, a second broadcast message from the first electronic device through the short-range communication module; and
connecting, by the second electronic device in response to the second broadcast message, to the first electronic device through the short-range communication module.

20. The method according to any one of claims 10 to 19, wherein outputting, by the second electronic device in response to the first broadcast message, at least one of the following: the distance between the first electronic device and the second electronic device, and the direction of the first electronic device relative to the second electronic device comprises:
in response to a first broadcast message at a first moment, displaying, by the second electronic device, one or more of a first distance, a first direction, and first information, wherein the first distance is a distance between the first electronic device and the second electronic device at the first moment, the first direction is a direction of the first electronic device relative to the second electronic device at the first moment, and the first information represents a confidence of the first direction; and
in response to a first broadcast message at a second moment, displaying, by the second electronic device, one or more of a second distance, a second direction, and second information, wherein the second distance is a distance between the first electronic device and the second electronic device at the second moment, the second direction indicates a direction of the first electronic device relative to the second electronic device at the second moment, and the second information represents a confidence of the second direction.

21. The method according to claim 20, wherein the first distance is greater than the second distance, and the confidence of the first direction is lower than the confidence of the second direction.

22. The method according to any one of claims 10 to 21, wherein the direction of the first electronic device relative to the second electronic device is represented by an included angle between an orientation of the second electronic device and a direction of a connection line between the first electronic device and the second electronic device.

23. A method applied to a device search system, wherein the device search system comprises a first electronic device and a second electronic device, both the first electronic device and the second electronic device comprise a short-range communication module and a sparklink module, a short-range communication module of the first electronic device and a sparklink module of the first electronic device are in an operating state when the first electronic device is in a power-off state or a power saving mode, and the method comprises:
when the first electronic device is in the power-off state or the power saving mode and the short-range communication module of the first electronic device has established a connection to a short-range communication module of the second electronic device, sending, by the short-range communication module of the second electronic device, a first instruction to the short-range communication module of the first electronic device;
sending, by the sparklink module of the first electronic device in response to the first instruction, a first broadcast message to a sparklink module of the second electronic device; and
outputting, by the second electronic device in response to the first broadcast message, at least one of the following: a distance between the first electronic device and the second electronic device, and a direction of the first electronic device relative to the second electronic device.

24. An electronic device, comprising a short-range communication module, a sparklink module, a processor, and a memory, wherein the memory is coupled to the processor, the memory is configured to store program code, the program code comprises instructions, and the processor reads the instructions from the memory, to enable the electronic device to perform the method according to any one of claims 1 to 9, or enable the electronic device to perform the method according to any one of claims 10 to 22.

25. A computer-readable storage medium, wherein the computer-readable storage medium comprises a computer program, and when the computer program is run on an electronic device, the electronic device is enabled to perform the method according to any one of claims 1 to 9, or the electronic device is enabled to perform the method according to any one of claims 10 to 22.

26. A computer program product, wherein the computer program product comprises a computer program or instructions, and when the computer program or the instructions are run on a computer, the computer is enabled to perform the method according to any one of claims 1 to 9, or the computer is enabled to perform the method according to any one of claims 10 to 22.

27. A device search system, comprising a first electronic device and a second electronic device, wherein the first electronic device is configured to perform the method according to any one of claims 1 to 9, and the second electronic device is configured to perform the method according to any one of claims 10 to 22.
